# EUROPÄISCHE PATENTSCHRIFT

(11) **EP 3 899 095 B1**
(45) Veröffentlichungstag und Bekanntmachung des Hinweises auf die Patenterteilung: **02.07.2025**
(21) Anmeldenummer: 19832070.7
(22) Anmeldetag: 18.12.2019
(51) Int. Cl.: C25B 1/04, H01M 8/04, C25B 15/02

(54) **ENERGIESYSTEM MIT EINEM SPÜLSYSTEM, UND VERFAHREN ZU DESSEN ÜBERWACHUNG**
ENERGY SYSTEM WITH A FLUSHING SYSTEM, AND METHOD FOR MONITORING SAME
SYSTÈME D'ÉNERGIE AVEC UN SYSTÈME DE RINÇAGE, ET PROCÉDÉ PERMETTANT DE SURVEILLER LEDIT SYSTÈME

(30) Priorität: 20.12.2018 DE 102018133203
(43) Veröffentlichungstag der Anmeldung: 27.10.2021
(73) Patentinhaber: HPS Home Power Solutions AG, 12489 Berlin (DE)
(72) Erfinder: HIERL, Andreas, 12526 Berlin (DE); SCHULTE, Jonas, 12103 Berlin (DE); LEVERENZ, Hendrik, 12053 Berlin (DE); SCHÖNFELDT, Renaldo, 12459 Berlin (DE)
(74) Vertreter: Müller, Thomas
(86) Internationale Anmeldenummer: PCT/EP2019/086025
(87) Internationale Veröffentlichungsnummer: WO 2020/127537

(56) Entgegenhaltungen:
- WO-A1-2017/089466
- DE-A1- 102014 103 724
- US-A1- 2013 149 627

## Beschreibung

Die vorliegende Erfindung betrifft zunächst ein Energiesystem mit einem Spülsystem zum Spülen von Komponenten des Energiesystems gemäß den Oberbegriffen der unabhängigen Patentansprüche 1 und 3 (siehe z.B. DE 10 2014 103724 A1). Weiterhin betrifft die Erfindung auch ein Verfahren zum Überwachen eines Spülsystems in einem solchen Energiesystem, siehe Anspruch 15.

Energiesysteme der gattungsgemäßen Art sind im Stand der Technik bereits auf vielfältige Weise bekannt. Mit derartigen Systemen wird üblicherweise Energie für verschiedenste Anwendungsgebiete erzeugt und bereitgestellt.

Bei einer bekannten Art solcher Energiesysteme wird in einer ersten Energiequelle Energie erzeugt. Bei der erzeugten Energie kann es sich beispielsweise um Wasserstoff handeln. Der Wasserstoff wird beispielsweise in einer Elektrolyseeinrichtung erzeugt und in einer zweiten Energiequelleneinrichtung, bei der es sich um eine Speichereinrichtung handelt, gespeichert. Hierbei handelt es sich beispielsweise um eine erste Betriebsweise des Energiesystems. Während des Betriebs des Energiesystems wird der Wasserstoff aus der Speichereinrichtung ausgespeichert und in einer ersten Energiesenkeneinrichtung verbraucht. Hierbei handelt es sich beispielsweise um eine zweite Betriebsweise des Energiesystems. Bei einer solchen ersten Energiesenkeneinrichtung handelt es sich beispielsweise um eine Brennstoffzelleneinrichtung. Üblicherweise sind die vorbeschriebenen Komponenten des Energiesystems räumlich voneinander getrennt und über eine Verbindungsleitungseinrichtung miteinander verbunden. Beide vorgenannten Betriebsweisen bedürfen üblicherweise eines unterschiedlichen Druckniveaus. Während in der ersten Betriebsweise mit der Elektrolyse Drücke von 20 bis 60 bar vorherrschen, sind für den Betrieb der Brennstoffzelleneinrichtung in der zweiten Betriebsweise Drücke von kleiner 20 bar erforderlich. Ein solches bekanntes Energiesystem ist beispielsweise in der DE 103 07 112 A1 offenbart.

Im Rahmen des Betriebs eines solchen Energiesystems ist es erforderlich, die Brennstoffzelleneinrichtung, insbesondere auf deren Anodenseite und/oder die Elektrolyseeinrichtung, insbesondere auf deren Kathodenseite, regelmäßig zu spülen. Ein Spülen, das auch als "Purgen" bezeichnet wird, ist insbesondere erforderlich, um unerwünschte Fremdgasanteile, sowie sich lokal in den Zellstrukturen ansammelndes flüssiges Wasser, die die Leistungsfähigkeit und die Lebensdauer der Brennstoffzelleneinrichtung und/oder der Elektrolyseeinrichtung negativ beeinflussen können, in regelmäßigen Abständen oder abhängig von den Betriebszuständen abzuführen. Das Spülen erfolgt unter Zuhilfenahme eines geeigneten Spülsystems.

Ein bekanntes Spülsystem, von dem die vorliegende Erfindung ausgeht, ist in der WO 2017/089466 A1 der Anmelderin offenbart und beschrieben. Bei dieser bekannten Lösung wird während des Spülvorgangs ein mit Wasserstoff beladener Spülvolumenstrom erzeugt und in einer einer Spüleinrichtung zugeordneten Speicherkammer zunächst gespeichert. Die Speicherkammer dient dabei als Pufferspeicher beziehungsweise als Zwischenspeicher. Aus der Speicherkammer wird der mit Wasserstoff beladene Spülvolumenstrom anschießend als Ablassvolumenstrom über eine Ausströmeinrichtung an die Umgebung abgegeben. Ein anderes Spülsystem zum Spülen einer Brennstoffzellenvorrichtung ist in der DE 10 2014 103 724 A1 offenbart.

Beispielsweise handelt es sich bei der Brennstoffzelleneinrichtung und der Elektrolyseeinrichtung sowie dem Spülsystem um Komponenten eines ersten Untersystems des Energiesystems, welches beispielsweise in einem Systemschrank untergebracht ist. Die Abgabe des Ablassvolumenstroms, der einige Prozent Wasserstoff enthält, erfolgt an die Umgebung dann derart, dass er über die Ausströmeinrichtung in einen bestimmten, als Mischzone bezeichneten Bereich im Systemschrank abgegeben wird. Dieser Bereich ist eigens dafür ausgebildet. Denn bei dem Ablassvolumenstrom handelt es sich wegen des Wasserstoffgehalts, der an dieser Stelle ein Schadgas darstellt, um ein explosives Gasgemisch, so dass sich im Bereich des Austritts keine Zündquellen in der Nähe befinden dürfen. Um den Wasserstoffgehalt auf einen Wert unterhalb der unteren Explosionsgrenze zu bringen, ist es erforderlich, den mit Wasserstoff beladenen Ablassvolumenstrom so weit zu verdünnen, dass der Wasserstoffgehalt im Volumenstrom unter die untere Explosionsgrenze rutscht. Dies wird beispielsweise erreicht, indem der Ablassvolumenstrom in der Mischzone mit einem weiteren Luftvolumenstrom vermischt wird. Bei diesem weiteren Luftvolumenstrom handelt es sich beispielsweise um einen Abluftvolumenstrom, der während des Betriebs des Energiesystems an anderer Stelle entsteht.

Das Spülsystem umfasst in der Regel verschiedene Komponenten, die über Leitungsabschnitte einer Verbindungsleitungseinrichtung miteinander verbunden sind. Im Betrieb des Spülsystems muss zu jeder Zeit verhindert werden, dass Wasserstoff an irgendwelchen Stellen des Spülsystems unkontrolliert austreten kann. Das passiert insbesondere dann, wenn irgendwo im Spülsystem ein Fehler auftritt. Beispielsweise können einzelne Leitungsabschnitte des Spülsystems undicht werden. Gleiches gilt für Ventileinrichtungen und dergleichen. Die Speicherkammer der Spüleinrichtung ist oftmals als volumenveränderliche Speicherkammer, beispielsweise in Form eines Faltenbalgs, ausgebildet. Eine solche Speicherkammer ist ein volumenveränderlicher Druckbehälter mit darin befindlichem Gas, welches bei bestimmungsgemäßem und fehlerhaftem Austritt eine gefährliche explosionsfähige Atmosphäre bilden kann. Insbesondere ein Faltenbalg ist nicht überdrucksicher, und sein Material unterliegt Versprödung, was Undichtigkeiten möglich macht. Bei der Überwachung des Spülsystems können wegen der Explosionsgefahr durch austretenden Wasserstoff keine nicht-explosionsgeschützten Einrichtungen, beispielsweise Sensoreinrichtungen. verwendet werden. Die Verwendung von explosionsgeschützten Spezial-Sicherheitseinrichtungen ist jedoch kostenintensiv und damit nach Möglichkeit zu vermeiden.

Ausgehend vom genannten Stand der Technik liegt der vorliegenden Erfindung deshalb die Aufgabe zugrunde, durch einfache konstruktive und kostengünstige Maßnahmen ein Spülsystem des Energiesystems dahingehend weiter vorteilhaft zu modifizieren, dass eine sicherheitsgerichtete Überwachung des Spülsystems ermöglicht wird, und zwar ohne den Einsatz entsprechender, explosionsgeschützter Spezial-Sicherheitseinrichtungen wie beispielsweise Wasserstoffsensoren oder dergleichen.

Diese Aufgabe wird erfindungsgemäß gelöst durch das Energiesystem mit den Merkmalen gemäß dem unabhängigen Patentanspruch 1, welches den ersten Aspekt der Erfindung darstellt, durch das Energiesystem mit den Merkmalen gemäß dem unabhängigen Patentanspruch 3, welches den zweiten Aspekt der Erfindung darstellt, und durch das Verfahren mit den Merkmalen gemäß dem unabhängigen Patentanspruch 15, welches den dritten Aspekt der Erfindung darstellt. Weitere Merkmale und Details der Erfindung ergeben sich aus den Unteransprüchen, der Beschreibung sowie den Zeichnungen. Dabei gelten Merkmale und Details, die im Zusammenhang mit dem ersten Erfindungsaspekt offenbart sind, vollumfänglich auch im Zusammenhang mit dem zweiten und dritten Erfindungsaspekt, und jeweils umgekehrt, so dass hinsichtlich der Offenbarung eines der Erfindungsaspekte stets vollinhaltlich auch Bezug auf die jeweils anderen Erfindungsaspekte genommen und auf diese verwiesen wird.

Der grundlegende Gedanke der vorliegenden Erfindung besteht in der Bereitstellung eines Sicherheitskonzepts für das Spülsystem in einem Energiesystem. Mit der vorliegenden Erfindung, wie sie sich aus den verschiedenen Erfindungsaspekten ergibt, wird eine Überwachung des Spülsystems, insbesondere des Zustands einzelner Komponenten des Spülsystems, bereitgestellt, mittels derer insbesondere Fehler detektiert und bei Feststellung von Fehlern geeignete Fehlerreaktionen eingeleitet werden können. Bevorzugt ist das Spülsystem für eine kontinuierliche Zustandsüberwachung und Zustandsanalyse bereitgestellt. Eine grundlegende Komponente des Spülsystems ist dabei eine besonders ausgestaltete Sicherheitssteuereinrichtung, mittels derer sicherheitsgerichtete Funktionen ausgeführt werden. Insbesondere kann mit der vorliegenden Erfindung gemäß der verschiedenen Erfindungsaspekte erreicht werden, dass im Regelbetrieb und Fehlerbetrieb des Spülsystems unbemerkt keine gefährlichen explosionsfähigen Atmosphären entstehen können.

Die Erfindung ist zunächst gerichtet auf ein Energiesystem mit einem Spülsystem, durch das einzelne Komponenten eines Energiesystems gespült werden. Bei dem Spülsystem handelt es sich insbesondere um ein aus mehreren Komponenten bestehendes Ganzes, wobei die Komponenten miteinander zu einer zweckgebundenen Einheit verbunden sind. Das Spülsystem ist entsprechend der Erfindung Bestandteil des Energiesystems. Bei dem Energiesystem handelt es sich wiederum insbesondere um ein aus mehreren Komponenten bestehendes Ganzes, wobei die Komponenten miteinander zu einer zweckgebundenen Einheit verbunden sind. Im vorliegenden Fall handelt es sich bei dem Energiesystem bevorzugt um ein System zum Erzeugen beziehungsweise Bereitstellen von Energie, vorzugsweise von elektrischer Energie. Grundsätzlich ist die Erfindung nicht auf bestimmte Arten von Energiesystemen beschränkt. Im Folgenden werden diesbezüglich verschiedene bevorzugte Ausführungsbeispiele beschrieben.

In einer bevorzugten Ausführungsform handelt es sich bei dem Energiesystem um ein Hausenergiesystem. Hausenergiesysteme sind grundsätzlich aus dem Stand der Technik bekannt und dienen der Versorgung von Häusern, beispielsweise von Niedrigenergiehäusern, Passivhäusern oder Nullenergiehäusern, mit Energie in Form von Wärme und insbesondere in Form von Strom, beispielsweise Strom aus regenerativen Energiequellen wie beispielsweise Photovoltaik (PV)-Generatoren oder Kleinwindkraftanlagen. Ein solches Hausenergiesystem schafft die Grundlage dafür, dass der Energiebedarf eines Hauses, insbesondere eines Niedrigenergiehauses, eines Passivhauses oder eines Nullenergiehauses, sowohl hinsichtlich des Strom- als auch des Wärmebedarfs vollständig aus erneuerbaren Energiequellen gedeckt werden kann und somit vollständige CO₂-Freiheit im Betrieb besteht. Wenigstens aber kann der Strombedarf eines Hauses im Sinne einer anzustrebenden Eigenverbrauchserhöhung nahezu vollständig aus erneuerbaren Energiequellen, insbesondere mittels eines PV-Generators und/oder einer Kleinwindenergieanlage, gedeckt werden.

Ein derartiges Hausenergiesystem ist beispielsweise in den Patentanmeldungen WO 2017/089468 A1 und WO 2017/089469 A1 der Anmelderin offenbart und beschrieben, deren Offenbarungsgehalt in die Beschreibung der vorliegenden Patentanmeldung mit einbezogen wird.

Gemäß einer bevorzugten Ausführungsform weist ein Hausenergiesystem der genannten Art die folgenden Grundmerkmale auf:
- einen DC-Einspeisepunkt, bevorzugt ausgebildet für eine Nenn-Spannung von 48 Volt, und/oder einen AC-Einspeisepunkt, bevorzugt ausgebildet für eine Spannung von 230 Volt oder 110 Volt, wobei der DC-Einspeisepunkt und/oder der AC-Einspeisepunkt im Betrieb zumindest zeitweise mit einem elektrischen Verbraucher, der eine Verbrauchs-Leistung aufweist, verbunden ist,
- einen elektrisch mit dem DC-Einspeisepunkt wenigstens zeitweise verbundenen PV-Generator zum Erzeugen einer elektrischen PV-Leistung,
- eine elektrisch mit dem DC-Einspeisepunkt oder mit dem AC-Einspeisepunkt wenigstens zeitweise verbundene Brennstoffzelleneinheit zum Erzeugen einer elektrischen Brennstoffzellen-Leistung,
- eine elektrisch mit dem DC-Einspeisepunkt verbundene Elektrolyseeinheit zum Erzeugen von durch die Brennstoffzelleneinheit zu verbrauchendem Wasserstoff, wobei die Elektrolyseeinheit im Betrieb mit einer elektrischen Elektrolyse-Eingangsleistung gespeist wird,
- einen Wasserstofftank, insbesondere als Langzeitenergiespeicher, der mit der Brennstoffzelleneinheit und der Elektrolyseeinheit wenigstens zeitweise fluidverbunden ist und zum Speichern von mittels der Elektrolyseeinheit zu erzeugendem und durch die Brennstoffzelleneinheit zu verbrauchendem Wasserstoff ausgebildet ist,
- eine Speicher-Batterieeinheit, insbesondere als Kurzzeitenergiespeicher, die elektrisch mit dem DC-Einspeisepunkt verbunden oder zu verbinden ist, so dass eine elektrische PV-Leistung und eine elektrische Brennstoffzellen-Leistung in die Speicher-Batterieeinheit eingespeichert werden kann und eine elektrische Elektrolyse-Eingangsleistung und eine Verbrauchs-Leistung aus der Speicher-Batterieeinheit entnommen werden können; und
- ein Steuermodul zum Steuern der Hausenergieanlage.

Gemäß dem ersten und zweiten Erfindungsaspekt wird ein Energiesystem mit einem Spülsystem bereitgestellt, siehe Ansprüche 1 und 3.

Ein Spülsystem, von dem die vorliegende Erfindung ausgeht, ist beispielsweise in der Patentanmeldung WO 2017/089466 A1 der Anmelderin offenbart und beschrieben, deren Offenbarungsgehalt in die Beschreibung der vorliegenden Patentanmeldung mit einbezogen wird.

Zunächst wird der grundlegende Aufbau und die grundlegende Funktionsweise des Spülsystems beschrieben. Das Spülsystem, welches auch als "Purge-System" bezeichnet wird, dient dazu, um wenigstens eine Energiequelleneinrichtung und/oder wenigstens eine Energiesenkeneinrichtung zu spülen. Dieser Spülvorgang wird auch als "Purgen" bezeichnet. Diese beiden genannten Komponenten stellen Bestandteile eines Energiesystems dar, welches vorstehend in der allgemeinen Beschreibung und weiter unten im Detail beschrieben wird, so dass an dieser Stelle diesbezüglich auch auf die entsprechenden Ausführungen Bezug genommen und verwiesen wird. In einer bevorzugten Ausführungsform, anhand derer die Erfindung exemplarisch erläutert wird, handelt es sich bei der Energiequelleneinrichtung um eine Elektrolyseeinrichtung, insbesondere zur Herstellung von Wasserstoff. Bei der Energiesenkeneinrichtung handelt es sich bevorzugt um eine Brennstoffzelleneinrichtung.

Das Spülsystem weist eine Spüleinrichtung auf, die derart bereitgestellt ist, dass sie in der Lage ist, während eines Spülvorgangs einen Ablassvolumenstrom zu erzeugen. Dieser Ablassvolumenstrom, der Wasserstoff enthält, was an dieser Stelle ein Schadgas darstellt, entsteht beispielsweise dann, wenn die Brennstoffzelleneinrichtung, insbesondere auf deren Anodenseite, und/oder die Elektrolyseeinrichtung, insbesondere auf deren Kathodenseite, gespült wird/werden.

In einer bevorzugten Ausführungsform weist das Spülsystem eine Spüleinrichtung mit einem Spülkanal auf, der einen ersten und mindestens einen zweiten Spülkanalabschnitt aufweist, die über ein Purge-Ventil der Spüleinrichtung miteinander fluidverbindbar sind, und mit einem mit dem Spülkanal fluidverbundenen und dem Purge-Ventil nachgeschalteten Pufferspeicher mit mindestens einer Speicherkammer, die zur Zwischenspeicherung einer pulsartig mit einem Spül-Massenstrom aus der Brennstoffzelleneinrichtung und/oder der Elektrolyseeinrichtung auszuspülenden Fluidmasse vorgesehen ist, so dass diese Fluidmasse mit einem Ablass-Massenstrom, bei dem es sich um den Ablassvolumenstrom handelt, der geringer als der Spül-Massenstrom ist, aus einer mit dem zweiten Spülkanalabschnitt fluidverbundenen Ausströmeinrichtung abgelassen werden kann. Der Ablass-Massenstrom, welcher typischerweise zu großen Teilen aus Wasserstoff besteht, kann einem Luftmassenstrom, bei dem es sich um den Luftvolumenstrom handelt, zugemischt werden, so dass das entstehende Gasgemisch eine Wasserstoffkonzentration in allen Betriebszuständen deutlich unterhalb der unteren Zündgrenze von Wasserstoff in Luft aufweist. Bei diesem Luftvolumenstrom handelt es sich bevorzugt um einen solchen, beispielsweise um einen Abluftvolumenstrom, der beim Betrieb des Energiesystems an anderer Stelle entsteht. Durch diesen Verdünnungseffekt ist ein sicherer Betrieb des Energiesystems möglich. Dadurch, dass dem Purge-Ventil ein Pufferspeicher mit einer Speicherkammer nachgeschaltet ist, kann eine pulsartig mit dem Spül-Massenstrom ausgetragene Fluidmasse mit einem Ablass-Massenstrom, der geringer als der Spül-Massenstrom ist, ausgetragen werden. Vorteilhafterweise ergibt sich dadurch eine Glättung des pulsartigen Spül-Massenstroms, was vorteilhaft zur Vermeidung von kritischen Wasserstoffkonzentrationen bei gleichzeitig niedrigerem Abluft-Massenstrom führt.

In einer bevorzugten Ausgestaltung ist die Speicherkammer expandierbar, das heißt volumenveränderlich, ausgebildet. Die Speicherkammer kann durch die pulsartig mit dem Spül-Massenstrom aus der Brennstoffzelleneinrichtung und/oder der Elektrolyseeinrichtung ausgespülten Fluidmasse expandierbar sein. Besonders bevorzugt ist die Speicherkammer als Faltenbalg ausgebildet, der ein jeweiliges Spül-Volumen, das heißt den Spül-Massenstrom multipliziert mit einer Pulsdauer eines Purges, ohne, oder mit nur geringfügigem Aufbau von Gegendruck, aufnehmen kann. Ein solcher Faltenbalg wird auch als "Purgebalg" bezeichnet. Eine als Faltenbalg ausgebildete Speicherkammer kann ausgebildet sein, durch eine Gravitationskraft, insbesondere ausschließlich durch eine Gravitationskraft einer bevorzugt frei beweglichen Endplatte des Faltenbalgs, in ihren nicht expandierten Zustand zurückbewegt zu werden. Zur gezielten Anpassung der Kraft, die den Faltenbalg in seinen nicht expandierten Zustand zurückbewegt, und damit der Entladezeit und des Druckverlaufes des Faltenbalgpuffers über der Zeit, kann die Gravitationskraft auch durch eine angebrachte Federvorrichtung verstärkt oder teilweise kompensiert sein.

Wie schon erwähnt wurde, wird der Ablassvolumenstrom aus der Speicherkammer bereitgestellt, die insbesondere als Faltenbalg ausgebildet ist. Die vorliegende Erfindung ist jedoch nicht auf diese Ausführungsform beschränkt, In anderer Ausgestaltung kann die Speicherkammer als Blasenspeicher oder als Kolbenspeicher ausgebildet sein. Alternativ zu einer expandierbaren Ausgestaltung der Speicherkammer kann die Speicherkammer aber auch als starrer Druckbehälter ausgebildet sein, bei welchem die Speicherkammer derart ausgebildet ist, dass die pulsartig mit dem Spül-Massenstrom aus der Brennstoffzelleneinrichtung und/oder der Elektrolyseeinrichtung ausgespülte Fluidmasse zu einem Druckanstieg in der Speicherkammer führt.

Das Spülsystem kann ausgebildet sein, einen Spül-Volumenstrom auf einen Ablassvolumenstrom von weniger als 10%, vorzugsweise weniger als 3 % des Spül-Volumenstroms zu reduzieren. Bevorzugt erfolgt ein Austragen des Ablassvolumenstrom zur Umgebung über einen mindestens 50 Nm³/h großen Abluftvolumenstrom, der auch als Fortluftvolumenstrom bezeichnet wird. Bevorzugt liegt ein Nenn-Betriebsdruck der Speicherkammer weniger als 50 Millibar, bevorzugt weniger als 20 Millibar über einem Betriebsdruck des Abluftvolumenstroms beziehungsweise Fortluftvolumenstroms.

Beim Spülvorgang kann bestimmungsgemäß flüssiges Wasser mit ausgetragen werden. In einer bevorzugten Variante wird das Wasser zunächst vom Gasstrom abgeschieden und danach vorteilhafterweise in den Prozess der Brennstoffzelle und/oder der Elektrolyse zurückgeführt. Die Wasser-Abscheidung kann vorteilhaft in der Speicherkammer realisiert sein, da dort die Strömungsgeschwindigkeiten des Trägergases für eine Abscheidung der Flüssigkeit über Gravitationskräfte vorteilhaft gering sind. Vorzugsweise hat die Speicherkammer mindestens je einen Eingang und/oder einen Ausgang für das Spülgas. Flüssigkeit, die zusammen mit dem wasserstoffhaltigen Spülgas über den Einlass mit hoher Strömungsgeschwindigkeit in die Speicherkammer gelangt, kann dort vorzugsweise gravimetrisch und/oder durch strömungsführende und/oder tropfenabscheidende Einbauten und/oder bei entsprechender tangentialer Einleitung durch Zentrifugalkräfte oder durch andere gängige Verfahren nach dem Stand der Technik vom Gasstrom abgeschieden werden. Die Flüssigkeit kann vorzugsweise am Boden der Speicherkammer gesammelt und geschlossen über den Flüssigkeitsauslass abgeleitet und vorzugsweise dem Prozess wieder zugeführt werden.

Die Speicherkammer kann mit einer Ausgleichsbehältereinrichtung, die einen Ausgleichsbehälter aufweist, verbunden sein. Die Ausgleichsbehältereinrichtung kann als Überdruckschutz für die Speicherkammer dienen. Der dann in den Ausgleichsbehälter abfließende Wasserstoff führt zu einer Druckentlastung der Speicherkammer. Auch Wasser, welches sich in der Speicherkammer ansammelt, kann von der Speicherkammer in die Ausgleichsbehältereinrichtung abgegeben werden. Von dort kann das Wasser aus dem Spülvorgang wieder zur Nutzung, beispielsweise in die Elektrolyseeinrichtung, zurückgeführt werden.

Die Spüleinrichtung weist eine Füllstandssensoreinrichtung auf, insbesondere eine der Speicherkammer zugeordnete Füllstandssensoreinrichtung. Bevorzugt kann die Füllstandssensoreinrichtung zum Detektieren eines Expansionszustands der Speicherkammer ausgebildet und angeordnet sein. Die Füllstandssensoreinrichtung kann beispielsweise als optischer Sensor oder magnetischer Sensor oder als Ultraschallsensor ausgebildet sein und ist vorzugsweise für den Betrieb in einer potentiell wasserstoffhaltigen Umgebung zulässig. Bevorzugt ist die Füllstandssensoreinrichtung derart angeordnet und eingestellt, dass diese bei einem Expansionszustand von bevorzugt maximal 80 % des Maximalvolumens, welcher beispielsweise bei einer fehlerhaft nicht mehr schließenden Ventileinrichtung, beispielsweise einem Magnetventil, auftreten kann, eine Sicherheitskette auslöst und weiteres Ausströmen von Wasserstoff verhindert. Über die Füllstandssensoreinrichtung kann in einem bevorzugten Verfahren auch die Qualität des Spülvorgangs überwacht und/oder der Spülvorgang von einem gesteuerten Prozess über die Erfassung des tatsächlich gespülten Volumens in einen geregelten Prozess überführt werden.

Gemäß dem ersten Aspekt der Erfindung wird eine erste bevorzugte Ausführungsform eines Energiesystems mit einem Spülsystem offenbart, die die Merkmale des unabhängigen Patentanspruchs 1 aufweist. Bei dieser ersten erfindungsgemäßen Ausführungsform ist eine Füllstandsmessung einer Speicherkammer über Druckmessung realisiert.

Das Spülsystem ist zum Spülen einer Energiequelleneinrichtung und/oder einer Energiesenkeneinrichtung des Energiesystems ausgebildet und weist eine Spüleinrichtung mit einer Speicherkammer auf. Diesbezüglich wird auf die allgemeinen Ausführungen weiter oben verwiesen. Eingangsseitig ist die Spülkammer mit einem von der Energiequelleneinrichtung abgehenden als Spülleitung ausgebildeten - ersten - Leitungsabschnitt und/oder mit einem von der Energiesenkeneinrichtung abgehenden als Spülleitung ausgebildeten - zweiten - Leitungsabschnitt fluidverbunden, vorzugsweise mit beiden. Ein Fluid ist generell ein fließendes Medium, welches flüssig oder gasförmig sein kann. Gemäß der vorliegenden Erfindung ist das Fluid bevorzugt ein gasförmiges Medium, welches insbesondere auch flüssige Bestandteile aufweisen kann, beispielsweise ein wasserstoffhaltiges Gasgemisch mit einem gewissen Wasseranteil. "Fluidverbunden" bedeutet dabei insbesondere, dass die Verbindung zwischen den Komponenten so gestaltet ist, dass das Fluid durch diese Verbindung strömen beziehungsweise fließen kann. Bei einer solchen Verbindung handelt es sich bevorzugt um eine Rohrleitung, eine Schlauchleitung, beziehungswiese einen Abschnitt davon, und dergleichen.

Das Spülsystem weist eine Überwachungseinrichtung zum Überwachen des Zustands der Speicherkammer auf. Die Überwachungseinrichtung weist wenigstens eine der Speicherkammer zugeordnete Sensoreinrichtung zur Überwachung des Füllstands der Speicherkammer auf. Je nach Ausgestaltung der Erfindung kann diese Sensoreinrichtung zur Überwachung des Füllstands der Speicherkammer auf unterschiedliche Weise ausgestaltet sein. Einige bevorzugte Ausführungsbeispiele hierzu werden im Verlauf der Beschreibung näher erläutert.

Erfindungsgemäß weist das Spülsystem eine Sicherheitssteuereinrichtung auf. Diese Sicherheitssteuereinrichtung hat die Funktion, dass damit eine sicherheitsgerichtete Überwachung des Spülsystems realisiert ist. Insbesondere ist die Sicherheitssteuereinrichtung derart ausgebildet, dass sie in der Lage ist, Fehlerzustände im Spülsystem zu detektieren und beim Erkennen solcher Fehlerzustände geeignete Fehlerreaktionen einzuleiten. Bevorzugt ist die Sicherheitssteuereinrichtung für eine kontinuierliche Überwachung des Spülsystems bereitgestellt. Die Sicherheitssteuereinrichtung kann auf verschiedene Weise ausgebildet sein. Einige bevorzugte Ausführungsbeispiele hierzu werden im weiteren Verlauf der Beschreibung näher erläutert.

Die Sensoreinrichtung zur Überwachung des Füllstands der Speicherkammer ist über eine dieser zugeordneten Schnittstelle mit der Sicherheitssteuereinrichtung verbunden. Eine Definition für die Schnittstelle im Lichte der vorliegenden Erfindung, die für sämtliche Erfindungsaspekt Gültigkeit hat, ist insbesondere eine Verbindung zwischen zwei Komponenten: Von dem Begriff "Schnittstelle" soll dabei auch die Verbindungsleitung zwischen den Komponenten selbst mit umfasst sein. Die Schnittstelle kann unidirektional oder bidirektional ausgebildet sein. Je nach Ausgestaltung der Komponenten kann die Schnittstelle dabei unterschiedlich ausgebildet sein. Beispielsweise kann es sich bei der Schnittstelle um eine Kommunikationsschnittstelle handeln, über die die Komponenten kommunikationsverbunden sind. Das heißt insbesondere, dass über die Schnittstelle eine Kommunikation stattfindet, beispielsweise in Form einer Datenübertragung oder Signalübertragung. Die Schnittstelle kann entweder drahtgebunden oder drahtlos ausgebildet sein. Von einer Komponente, beispielsweise einer Sensoreinrichtung, erfasste Werte werden über die Schnittstelle zu einer anderen Komponente übertragen, beispielsweise zur Sicherheitssteuereinrichtung. Befehle, insbesondere Steuerbefehle, können von der Sicherheitssteuereinrichtung über die Schnittstelle abgehen. Andere Formen von Schnittstellen gestatten es, dass über die Schnittstelle Fluide übertragen werden. Bei derartigen Schnittstellen handelt es sich dann beispielsweise um Leitungsschnittstellen, über die die Komponenten leitungsverbunden sind, beispielsweise über Leitungen, etwas Rohrleitungen, Schlauchleitungen oder dergleichen. Bei der vorliegenden Erfindung gemäß den verschiedenen Erfindungsaspekten kommen bevorzugt beide Typen von Schnittstellen zum Einsatz.

Gemäß dem ersten Aspekt der Erfindung weist die Sensoreinrichtung zur Überwachung des Füllstands der Speicherkammer wenigstens eine Druckmesseinrichtung auf oder ist als Druckmesseinrichtung ausgebildet. Mittels der Druckmesseinrichtung wird der in der Speicherkammer herrschende Druck, der einen Rückschluss auf den Füllzustand der Speicherkammer zulässt, erfasst. Das kann beispielsweise geschehen, indem der Druck in der Speicherkammer direkt gemessen wird. In anderer Ausgestaltung kann der Druck aus anderen Parametern ermittelt, beispielsweise berechnet werden. Durch den Einsatz einer Druckmessung in der Speicherkammer, die bevorzugt als volumenveränderliche Speicherkammer ausgebildet ist, ist das Detektieren aller Fehlerzustände möglich, wie beispielsweise einer Leckage in der Zufuhr, einer Leckage in der Speicherkammer, einer Verstopfung der Abgabe, einer Begrenzung der maximalen Menge, oder dergleichen. Eine Überwachung kann dabei bevorzugt durch einen Vergleich des aktuellen Drucks beziehungsweise Füllstands gegenüber minimalen und/oder maximalen Referenzwerten oder Endwerten erfolgen, was weiter unten noch in größerem Detail verdeutlicht wird.

Bevorzugt kann die Druckmesseinrichtung als Druckmesseinrichtung zur Erfassung eines Differenzdrucks und/oder zur Erfassung eines Relativdrucks und/oder zur Erfassung eines Absolutdrucks ausgebildet ist. Befindet sich das Spülsystem in einem geteilten Systemschrank mit einer rechten und einer linken Schrankhälfte, wie im Rahmen eines bevorzugten Ausführungsbeispiels weiter unten beschrieben ist, wird eine Differenzdruckbestimmung und Referenzdruckbestimmung bevorzugt mit einem Druck in der rechten Schrankhälfte vorgenommen. Bei einer Differenzdruckbestimmung kann die Druckmesseinrichtung selbst außerhalb des Systemschranks liegen. Bei einer Relativdruckbestimmung muss die Druckmesseinrichtung innerhalb des Systemschranks liegen. Die Auswertung und Einleitung der Fehlerreaktion erfolgt vorzugsweise über die Sicherheitssteuereinrichtung,
Der Druck ist neben der Temperatur eine der wichtigsten physikalischen Zustandsgrößen. Die verschiedenen Arten des Druckes werden insbesondere nach dem Bezugsdruck unterschieden.

Der eindeutigste Bezugsdruck ist der Druck Null, der im luftleeren Raum des Universums herrscht. Ein Druck, der auf diesen Bezugsdruck bezogen ist, wird absoluter Druck oder Absolutdruck genannt. Absolutdrucksensoreinrichtungen messen beispielsweise den Druck im Vergleich zu einem in der Sensoreinrichtung eingeschlossenen Vakuum.

Die Differenz zweier Drücke wird Druckdifferenz dp genannt. In Fällen, bei denen die Differenz zweier Drücke selbst die Messgröße darstellt, spricht man vom Differenzdruck. Um Differenzdruck zu messen, werden in einer Druckmesseinrichtung demnach zwei unterschiedliche Drücke erfasst. Nur wenn die gemessenen Werte unterschiedlich sind, wird ein Differenzdruck angezeigt. Differenzdruckmesseinrichtungen besitzen insbesondere zwei separate Druckanschlüsse.

Relativdrucksensoreinrichtungen messen den Druck in Bezug zum Luftdruck der Umgebung. Luftdruckschwankungen, die beispielsweise durch Veränderungen der Wetter- oder Höhenlage hervorgerufen werden, übertragen sich bei diesen Sensoreinrichtungen direkt auf den aktuellen Druckmesswert. Ist der an der Relativdrucksensoreinrichtung anstehende Druck größer als der Umgebungsdruck, spricht man von Überdruck. Ein Druck, der kleiner als der Atmosphärendruck ist, wird als Unterdruck bezeichnet.

In einer ersten Ausführungsform weist die erfindungsgemäße Druckmesseinrichtung eine Drucksensoreinrichtung auf, oder ist als eine solche Drucksensoreinrichtung ausgebildet. Die Drucksensoreinrichtung kann an oder in der Speicherkammer angeordnet oder ausgebildet sein. Über eine Schnittstelle kann diese Drucksensoreinrichtung direkt mit der Sicherheitssteuereinrichtung verbunden, vorzugsweise kommunikationsverbunden, sein. De Drucksensoreinrichtung misst den Druck in der Speicherkammer und überträgt die Messwerte an die Sicherheitssteuereinrichtung, wo die Messwerte ausgewertet werden.

In anderer Ausgestaltung weist die Druckmesseinrichtung eine Drucksensoreinrichtung auf, die mit einer anderen Komponente der Druckmesseinrichtung über eine Schnittstelle verbunden, insbesondere leitungsverbunden, ist. Diese andere Komponente der Druckmesseinrichtung ist dann bevorzugt über eine Schnittstelle mit der Sicherheitssteuereinrichtung verbunden, beispielsweise kommunikationsverbunden. In einem solchen Fall handelt es sich bei der Druckmesseinrichtung bevorzugt um eine Druckmesseinrichtung zur Bestimmung des Differenzdrucks.

In einer bevorzugten Ausführungsform ist die Drucksensoreinrichtung der Druckmesseinrichtung in Form einer Druckmesszelle ausgebildet, beispielsweise in Form einer kapazitiven Druckmesszelle. Druckmesszellen an sich sind dem Fachmann geläufig und bedürfen an dieser Stelle deshalb keiner weiteren Detailerläuterung. Grundsätzlich ist die Erfindung nicht auf bestimmte Typen von Druckmesseinrichtungen beschränkt.

Der Druck in der Speicherkammer kann auch auf andere Weise bestimmt werden, beispielsweise indem er über andere Parameter des Spülsystems beziehungsweise von Komponenten des Spülsystems bestimmt, beispielsweise berechnet wird. Dies wird nachfolgend im Zusammenhang mit dem zweiten Erfindungsaspekt anhand verschiedener Ausführungsbeispiele in größerem Detail beschrieben.

Gemäß dem zweiten Aspekt der Erfindung wird eine zweite bevorzugte Ausführungsform eines Energiesystems mit einem Spülsystem offenbart, die die Merkmale des unabhängigen Patentanspruchs 3 aufweist.

Das Spülsystem dient ebenfalls zum Spülen einer Energiequelleneinrichtung und/oder einer Energiesenkeneinrichtung des Energiesystems, und weist eine Spüleinrichtung mit einer Speicherkammer auf, die eingangsseitig mit einem von der Energiequelleneinrichtung abgehenden als Spülleitung ausgebildeten - ersten - Leitungsabschnitt und/oder mit einem von der Energiesenkeneinrichtung abgehenden als Spülleitung ausgebildeten - zweiten - Leitungsabschnitt fluidverbunden ist. Das Spülsystem entspricht insoweit dem Spülsystem des ersten Erfindungsaspekts und dem in der allgemeinen Beschreibung erläuterten Spülsystem, so dass an dieser Stelle zur Vermeidung von Wiederholungen auf die entsprechenden Ausführungen weiter oben vollinhaltlich Bezug genommen und verwiesen wird.

Das Spülsystem weist eine erste Überwachungseinrichtung zum Überwachen des Zustands der Speicherkammer auf, wobei die erste Überwachungseinrichtung wenigstens eine der Speicherkammer zugeordnete Sensoreinrichtung zur Überwachung des Füllstands der Speicherkammer aufweist. Bei dem zweiten Erfindungsaspekt kommt es an dieser Stelle zunächst auf eine konkrete Ausgestaltung der ersten Überwachungseinrichtung noch nicht an. Allerdings werden weiter unten einige bevorzugte Ausführungsformen für die erste Überwachungseinrichtung angegeben.

Zusätzlich weist das Spülsystem des zweiten Erfindungsaspekts eine mit der Speicherkammer fluidverbundene Ausgleichsbehältereinrichtung auf. Die Ausgleichsbehältereinrichtung dient dazu, einen Ausgleich für die Speicherkammer zu schaffen, insbesondere wenn diese einen maximalen oder kritischen Füllgrad hinsichtlich Füllmenge und/oder Fülldruck erreicht hat. Bevorzugte Ausführungsbeispiele hierzu sind in der allgemeinen Beschreibung weiter oben, sowie weiter unten im Detail erläutert.

Wie beim ersten Erfindungsaspekt weist auch das Spülsystem des zweiten Erfindungsaspekts eine Sicherheitssteuereinrichtung auf, so dass hinsichtlich der Ausgestaltung und Funktionsweise der Sicherheitssteuereinrichtung auf die entsprechenden Ausführungen weiter oben vollinhaltlich Bezug genommen und verwiesen wird. Demgemäß ist die Sicherheitssteuereinrichtung zur sicherheitsgerichteten Überwachung des Spülsystems, insbesondere zum Detektieren von Fehlerzuständen und zum Einleiten von Fehlerreaktionen, bereitgestellt.

Wie beim ersten Erfindungsaspekt ist die Sensoreinrichtung zur Überwachung des Füllstands der Speicherkammer über eine dieser zugeordneten Schnittstelle mit der Sicherheitssteuereinrichtung in geeigneter Weise, die sich aus der Ausgestaltung der Sensoreinrichtung ergibt, verbunden. Hinsichtlich der Ausgestaltung und Funktion der Schnittstelle und der Verbindung wird ebenfalls auf die entsprechenden Ausführungen zum ersten Erfindungsaspekt weiter oben vollinhaltlich Bezug genommen und verwiesen.

Im Unterschied zum Spülsystem des ersten Erfindungsaspekts weist das Spülsystem des zweiten Erfindungsaspekts wenigstens eine weitere, - zweite - Überwachungseinrichtung auf, die zum Überwachen des Zustands der Ausgleichsbehältereinrichtung ausgebildet ist, und die analog zur ersten Überwachungseinrichtung, über eine dieser zugeordnete Schnittstelle mit der Sicherheitssteuereinrichtung verbunden ist. Im Folgenden werden auch zur zweiten Überwachungseinrichtung einige bevorzugte Ausführungsbeispiele beschrieben.

Die Sicherheitssteuereinrichtung gemäß den verschiedenen Aspekten der Erfindung kann auf unterschiedliche Weise ausgebildet sein. Bevorzugt weist die Sicherheitssteuereinrichtung Hardwarekomponenten und/oder Softwarekomponenten und/oder elektrische Bauelemente und/oder eine Kombination aus Hardwarekomponenten, Softwarekomponenten und elektrischen Bauelementen auf. Beispielsweise kann die Sicherheitssteuereinrichtung eine Datenverarbeitungseinrichtung aufweisen oder als Datenverarbeitungseinrichtung ausgebildet sein. In der Datenverarbeitungseinrichtung kann eine Software implementiert sein, die die sicherheitsgerichtete Überwachung des Spülsystems ausführt. Die Auswertung und Einleitung der Fehlerreaktion erfolgt in diesem Fall durch die Datenverarbeitungseinrichtung. Alternativ oder zusätzlich kann die Sicherheitssteuereinrichtung einen Sicherheitscontroller aufweisen oder als Sicherheitscontroller ausgebildet sein. Ein Sicherheitscontroller ist insbesondere ein Steuergerät, mittels dessen bestimmte Vorgänge, hier die Überwachung des Spülsystems, elektronisch gesteuert werden. Ein solcher Sicherheitscontroller weist in der Regel wenigstens einen integrierten Schaltkreis auf. Die Auswertung und Einleitung der Fehlerreaktion erfolgen in diesem Fall durch den Sicherheitscontroller. Alternativ oder zusätzlich kann die Sicherheitssteuereinrichtung eine Sicherheitslogik mit wenigstens einem Sicherheitsrelais aufweisen oder als eine solche ausgebildet sein. Die Auswertung und Einleitung der Fehlerreaktion erfolgt in diesem Fall durch die Sicherheitslogik mit Sicherheitsrelais.

Bevorzugt ist das Spülsystem in einem, insbesondere luftdichten, Systemschrank angeordnet. Bei dem Systemschrank handelt es sich bevorzugt um einen Systemschrank, in dem zusätzlich auch verschiedene Komponenten des Energiesystems, beispielsweise die Elektrolyseeinrichtung und die Brennstoffzelleneinrichtung, untergebracht sind. Der Systemschrank kann beispielsweise in eine rechte Schrankhälfte und eine linke Schrankhälfte mit einer dazwischen liegenden Zwischenwand unterteilt sein. Wenn sich beispielsweise die Speicherkammer in der linken Schrankhälfte und die Druckmesseinrichtung in der rechten Schrankhälfte befindet, sollte beim Öffnen der rechten Schrankhälfte, während ein Druck in der Speicherkammer herrscht, der Druckabfall der Umgebung zu einem kurzzeitigen Druckanstieg in der Messung führen. Dies kann über die Druckmesseinrichtung detektiert und in der Sicherheitssteuereinrichtung ausgewertet werden. Damit ist beispielsweise eine Detektion möglich, ob die rechte Schrankhälfte undicht ist und der in dem Systemschrank vorhandene Luftstrom nicht über die Fortluft an die Umgebung, sondern über die undichte Stelle im Systemschrank nach außen abgegeben wird.

Wie im allgemeinen Teil der Beschreibung weiter oben schon erläutert wurde, ist die Speicherkammer bevorzugt als volumenveränderliche Speicherkammer, beispielsweise als Faltenbalg beziehungsweise Purgebalg ausgebildet. In einem solchen Fall ist die Sensoreinrichtung zur Überwachung des Füllstands der Speicherkammer bevorzugt als Sensoreinrichtung zur Erfassung der Ausdehnung der Speicherkammer ausgebildet. In einer wie weiter oben beschrieben Weise ist diese Sensoreinrichtung über eine geeignete Schnittstelle mit der Sicherheitssteuereinrichtung verbunden, beispielsweise kommunikationsverbunden. Eine solche Sensoreinrichtung zur Erfassung der Ausdehnung der Speicherkammer kann auf verschiedene Weise ausgebildet sein. In einer bevorzugten Ausgestaltung ist die Sensoreinrichtung zur Erfassung der Ausdehnung der Speicherkammer als optische Lichtschrankeneinrichtung ausgebildet. Eine solche Lichtschrankeneinrichtung bietet einen guten Schutz gegen einen Überdruck in der Speicherkammer, der bei einer volumenveränderlichen Speicherkammer insbesondere durch eine zu große Auslenkung der Speicherkammer sichtbar wird. In alternativer Ausgestaltung kann eine solche Sensoreinrichtung beispielsweise auch als lasergestützte Abstandsmesseinrichtung oder als Dehnungsmessstreifeneinrichtung ausgebildet sein. Die Erfindung ist nicht auf die genannten Beispiele beschränkt.

Alternativ oder zusätzlich kann die Sensoreinrichtung zur Überwachung des Füllstands der Speicherkammer eine Druckmesseinrichtung aufweisen oder als Druckmesseinrichtung ausgebildet sein, insbesondere zur Erfassung des Drucks innerhalb der Speicherkammer. Die Druckmesseinrichtung, die über eine geeignete Schnittstelle mit der Sicherheitssteuereinrichtung verbunden, beispielsweise leitungsverbunden und/oder kommunikationsverbunden, ist, kann insbesondere als Druckmesseinrichtung zur Erfassung eines Differenzdrucks und/oder zur Erfassung eines Relativdrucks und/oder zur Erfassung eines Absolutdrucks ausgebildet sein. Bei einer solchen Druckmesseinrichtung handelt es sich bevorzugt um eine solche, die im Zusammenhang mit dem ersten Erfindungsaspekt ausführlich beschrieben ist, so dass zur Vermeidung von Wiederholungen an dieser Stelle auf die entsprechenden Ausführungen weiter oben vollinhaltlich Bezug genommen und verwiesen wird.

Nachfolgend wird die Ausgleichsbehältereinrichtung, die weiter oben schon allgemein erläutert wurde, so dass an dieser Stelle auch auf die Ausführungen weiter oben vollinhaltlich Bezug genommen und verwiesen wird, in größerem Detail beschrieben. Bevorzugt weist die Ausgleichsbehältereinrichtung einen Ausgleichsbehälter auf, der zumindest bereichsweise mit einer Flüssigkeit gefüllt oder befüllbar ist. Bei der Flüssigkeit handelt es sich bevorzugt um Wasser, insbesondere um ultrareines Wasser. Ultrareines Wasser kann nämlich auch für andere Prozesse im Energiesystem verwendet werden, beispielsweise in der Elektrolyseeinrichtung. Weiterhin weist die Ausgleichsbehältereinrichtung ein Ausgleichsrohr auf, welches, insbesondere luftdicht, mit der Speicherkammer verbunden ist, und welches in dem Ausgleichsbehälter einmündet. Optional weist der Ausgleichsbehälter einen als Zuleitung zum Ausgleichsbehälter ausgebildeten - dritten - Leitungsabschnitt und/oder einen als Ableitung vom Ausgleichsbehälter ausgebildeten - vierten - Leitungsabschnitt auf.

Eine solche Ausgleichsbehältereinrichtung wird nachfolgend anhand eines konkreteren bevorzugten Ausführungsbeispiels beschrieben. Der Ausgleichsbehälter befindet sich bevorzugt unterhalb der Speicherkammer, beispielsweise des Faltenbalgs. Die Speicherkammer ist unten mit dem Ausgleichsrohr luftdicht verbunden. Das Ausgleichsrohr endet im Ausgleichsbehälter. Da der Ausgleichsbehälter teilweise mit der Flüssigkeit, insbesondere Wasser, gefüllt ist, endet das Ausgleichsrohr innerhalb der im Ausgleichsbehälter befindlichen Flüssigkeitssäule. In der Speicherkammer befindliches, ein Schadgas, insbesondere Wasserstoff, enthaltendes Gas und auch Flüssigkeit, insbesondere Wasser, kann über das Ausgleichsrohr aus der Speicherkammer in den Ausgleichsbehälter abfließen. Der Ausgleichsbehälter dient somit zum einen als Überdruckausgleich für die Speicherkammer. Ist der Druck in der Speicherkammer zu groß, oder ist die Speicherkammer zu weit ausgedehnt, drückt das Gasgemisch aus der Speicherkammer gegen die Flüssigkeitssäule im Ausgleichsrohr und im Ausgleichsbehälter. Das Gas wird durch die Flüssigkeitssäule im Ausgleichsrohr durchgedrückt und perlt in den Zwischenraum des Ausgleichsbehälters, der sich zwischen der Oberfläche der Flüssigkeitssäule und einem oberen Deckel des Ausgleichsbehälters befindet. Mit steigendem Druck in der Speicherkammer sinkt dabei der Pegel im Ausgleichsrohr, so dass der Pegel im Ausgleichsrohr, wenn er entsprechend detektiert wird, als ein Maß für den in der Speicherkammer herrschenden Druck herangezogen werden kann. Ein solches Beispiel wird weiter unten näher beschrieben.

Zudem befindet sich in der Speicherkammer auch Flüssigkeit, insbesondere Wasser, das ebenfalls über das Ausgleichsrohr in den Ausgleichsbehälter gelangt. Dies geschieht bevorzugt nach dem an sich bekannten Prinzip der kommunizierenden Röhren. Die Flüssigkeit kann, wenn die Flüssigkeitssäule in dem Ausgleichsbehälter eine maximale Höhe erreicht hat, über die Ableitung abgelassen werden. Dazu verfügt die Ableitung bevorzugt über eine Ventileinrichtung. Die maximale Höhe der Flüssigkeitssäule im Ausgleichsbehälter wird bevorzugt mit einer geeigneten Sensoreinrichtung gemessen. Die Messwerte der Sensoreinrichtung werden in der Sicherheitssteuereinrichtung ausgewertet, die dazu in wie oben beschriebener Weise über eine Schnittstelle mit der Sensoreinrichtung verbunden, insbesondere kommunikationsverbunden, ist. Ein solches Beispiel wird weiter untern näher erläutert. Über die Zuleitung kann Flüssigkeit, insbesondere Wasser, in den Ausgleichsbehälter eingefüllt werden. Auch die Zuleitung verfügt deshalb bevorzugt über eine Ventileinrichtung. Bei den Ventileinrichtungen handelt es sich beispielsweise um Sperrventile, insbesondere um Magnetventile. Durch die eingefüllte Höhe der Flüssigkeitssäule in dem Ausgleichsbehälter kann beispielsweise das Druckverhalten in der Speicherkammer beeinflusst und eingestellt werden. Bei unterschiedlichen Luftdrücken, oder bei sich ändernden maximal zulässigen Drücken in der Speicherkammer beispielsweise kann die Höhe der Flüssigkeitssäule im Ausgleichsbehälter unterschiedlich eingestellt werden. Das Ablassen und Einfüllen von Flüssigkeit aus und in den Ausgleichsbehälter wird bevorzugt über die Sicherheitssteuereinrichtung gesteuert, die in einem solchen Fall in wie weiter oben beschriebener Weise bevorzugt über jeweils eine Schnittstelle mit den Ventileinrichtungen verbunden, insbesondere kommunikationsverbunden, ist. Ein solches Beispiel wird weiter unten im Detail erläutert.

Durch eine solche Ausgestaltung der Ausgleichsbehältereinrichtung ist insbesondere auch ein regelmäßiger Austausch der Flüssigkeit, insbesondere des Wassers, im Ausgleichsbehälter möglich, beispielsweise zum Schutz vor Verkeimung. So kann beispielsweise vorgesehen sein, dass über entsprechende Befehle der Sicherheitssteuereinrichtung in definierten Zeitabständen oder zu definierten Zeitpunkten die Flüssigkeit aus dem Ausgleichsbehälter abgelassen und anschließend wieder nachgefüllt wird. Durch Einbindung einer eigenen Flüssigkeitsaufbereitung, insbesondere Wasseraufbereitung, im Spülsystem beziehungsweise in dem Energiesystem kann beispielsweise einfache Flüssigkeit, beispielsweise einfaches Leitungswasser, eingesetzt werden.

Wie vorstehend schon angedeutet wurde, ist bevorzugt, wenn die Überwachungseinrichtung zum Überwachen des Zustands der Ausgleichsbehältereinrichtung eine Einrichtung zur Überwachung der Flüssigkeitssäule innerhalb des Ausgleichsbehälters aufweist. Diese Maßnahme wird bevorzugt in Ergänzung zu den vorstehend bereits beschriebenen Maßnahmen durchgeführt. Die Einrichtung zur Überwachung der Flüssigkeitssäule kann insbesondere eine Schaltereinrichtung zum Entleeren und Befüllen des Ausgleichsbehälters aufweisen oder mit dieser zusammenwirken. Bei der Schaltereinrichtung handelt es sich bevorzugt um einen so genannten Reed-Schalter. Reed-Schalter an sich sind dem Fachmann geläufig. In wie weiter oben beschriebener Weise ist die Einrichtung zur Überwachung der Flüssigkeitssäule, bevorzugt die Schaltereinrichtung, über eine Schnittstelle mit der Sicherheitssteuereinrichtung verbunden, insbesondere kommunikationsverbunden. Damit kann die Sicherheitssteuereinrichtung die Einrichtung zur Überwachung der Flüssigkeitssäule bei Bedarf aktivieren, etwa wenn die Flüssigkeit in dem Ausgleichbehälter zu bestimmten Zeitpunkten oder in bestimmten Zeitabständen ausgetauscht werden soll, oder wenn die Flüssigkeitssäule in dem Ausgleichsbehälter eine zu niedrige oder eine zu große Höhe hat. Damit ist eine Überwachung des Ausgleichsbehälters seitens der Sicherheitssteuereinrichtung über die Einrichtung zur Überwachung der Flüssigkeitssäule möglich. Beispielweise kann über die Sicherheitssteuereinrichtung ein regelmäßiger Test der Einrichtung zur Überwachung der Flüssigkeitssäule durch Entleeren und Befüllen des Ausgleichsbehälters ermöglicht werden, beispielsweise durch eine kontrollierte Betätigung der Schaltereinrichtung. Je nach Ausgestaltung ist beispielsweise möglich, dass die Schaltereinrichtung einen direkt am Ausgleichsbehälter befindlichen Zulauf oder Ablauf betätigt, das heißt öffnet oder schließt. Wenn in einer Zuleitung und Ableitung des Ausgleichsbehälters in wie weiter oben beschriebener Weise Ventileinrichtungen angeordnet sind, über die der Zulauf und der Ablauf gesteuert werden, befinden sich entsprechende Schaltereinrichtungen bevorzugt im Zusammenspiel mit den Ventileinrichtungen, oder stellen Bestandteile der Ventileinrichtungen dar, so dass die Ventileinrichtungen, bei Betätigung der Schaltereinrichtungen, geöffnet oder geschlossen werden.

Bevorzugt ist in der Sicherheitssteuereinrichtung eine Zeitfunktion implementiert, die bereitgestellt ist, um die Nachfüllzeit der Flüssigkeit in den Ausgleichsbehälter nach einer Entleerung zu überwachen. In diesem Fall wird insbesondere die Zeitdauer gemessen, die für ein Nachfüllen des Ausgleichsbehälters nach einer Entleerung benötigt wird. Diese gemessene Zeitdauer kann in der Sicherheitssteuereinrichtung mit vorgegebenen Referenzwerten verglichen werden. Wird ein Referenzwert beispielsweise überschritten oder unterschritten, kann dadurch in der Sicherheitssteuereinrichtung auf einen Fehler geschlossen werden. Ebenso kann die Zeitfunktion dazu dienen, dass der Ausgleichsbehälter zu bestimmten Zeitpunkten oder in bestimmten Zeitabständen entleert und wieder befüllt wird. In anderer Ausgestaltung kann in der Sicherheitssteuereinrichtung eine ereignisbezogene Funktion implementiert sein. Damit kann beispielsweis detektiert werden, ob ein bestimmtes Ereignis eingetreten ist, beispielsweise ob die Flüssigkeitssäule im Ausgleichsbehälter zu hoch oder zu niedrig ist. Auch dies geschieht bevorzugt wieder durch einen Vergleich mit entsprechenden Referenzwerten in der Sicherheitssteuereinrichtung. In einer bevorzugten Ausführungsform wird die Zeitfunktion zur Überwachung der Nachfüllzeit der Flüssigkeit, bevorzugt des Wassers, nach Auslösen der Schaltereinrichtung in der Sicherheitssteuereinrichtung ausgewertet, beispielsweise verglichen gegen maximale und/oder minimale Referenzwerte.

In weiterer Ausgestaltung weist die Überwachungseinrichtung zum Überwachen des Zustands der Ausgleichsbehältereinrichtung bevorzugt eine Einrichtung zur Erfassung der Höhe der Flüssigkeitssäule in dem Ausgleichsbehälter auf, welche insbesondere als Schwimmsensoreinrichtung oder als Einrichtung zur Gewichtsmessung ausgebildet ist. Diese Maßnahme wird bevorzugt in Ergänzung zu den vorstehend bereits beschriebenen Maßnahmen oder als Alternative zu der unmittelbar zuvor beschriebenen Maßnahme durchgeführt. Über diese Einrichtung kann die tatsächliche Höhe der Flüssigkeitssäule innerhalb des Ausgleichsbehälters detektiert werden, Dazu ist die Einrichtung zur Erfassung der Höhe der Flüssigkeitssäule wiederum in wie oben beschriebener Weise über eine Schnittstelle mit der Sicherheitssteuereinrichtung verbunden, beispielsweise kommunikationsverbunden. Die von der Einrichtung zur Erfassung der Höhe der Flüssigkeitssäule erfassten Werte werden über die Schnittstelle an de Sicherheitssteuereinrichtung übertragen und dort ausgewertet, beispielsweise durch einen Vergleich mit entsprechenden Referenzwerten. Ist die Flüssigkeitssäule beispielsweise zu niedrig, könnte dies auf eine Leckage im Ausgleichsbehälter hindeuten. Ist die Flüssigkeitssäule beispielsweise zu hoch, könnte dies darauf hindeuten, dass das Ablassen von Flüssigkeit aus dem Ausgleichsbehälter nicht richtig funktioniert.

In einer weiteren bevorzugten Ausführungsform weist die Einrichtung zur Erfassung der Höhe der Flüssigkeitssäule in dem Ausgleichsbehälter eine Druckmesseinrichtung zur Bestimmung des Differenzdrucks zwischen dem Druck in der Speicherkammer und dem Druck der Flüssigkeitssäule in dem Ausgleichsbehälter auf. Diese Maßnahme wird bevorzugt in Ergänzung zu vorstehend bereits beschriebenen Maßnahmen oder als Alternative zu zuvor beschriebenen Maßnahmen durchgeführt. Diese Druckmesseinrichtung kann beispielsweise als eine eigene, im Verglich zu der weiter oben beschriebenen - ersten - Druckmesseinrichtung unabhängige - zweite - Druckmesseinrichtung ausgebildet sein. Oder aber die genannte weitere - zweite - Druckmesseinrichtung ist Bestandteil der weiter oben beschriebenen - ersten - Druckmesseinrichtung. In diesem Fall stellt die weitere Druckmesseinrichtung insbesondere eine Funktionalität der weiter oben beschriebenen - ersten - Druckmesseinrichtung dar. Die letztgenannte Variante hat insbesondere den Vorteil, dass die Anzahl der erforderlichen Komponenten verringert werden kann. Die weitere - zweite -Druckmesseinrichtung, egal in welcher Variante, ist, wie weiter oben beschrieben, über eine geeignete Schnittstelle mit der Sicherheitssteuereinrichtung verbunden, beispielsweise leitungsverbunden und/oder kommunikationsverbunden. Die weitere -zweite - Druckmesseinrichtung ist bevorzugt in einer wie im Rahmen des ersten Erfindungsaspekts beschriebenen Weise ausgestaltet, so dass zur Vermeidung von Wiederholungen zur Ausgestaltung und Funktionsweise der weiteren - zweiten -Druckmesseinrichtung, ebenso wie zu deren Zusammenspie mit der Sicherheitssteuereinrichtung an dieser Stelle auf die vorstehenden Ausführungen zum ersten Erfindungsaspekt vollinhaltlich Bezug genommen und verwiesen wird. Die vorgenannte Druckmessung kann auf unterschiedliche Weise erfolgen. Nachfolgend wird hierzu ein bevorzugtes Ausführungsbeispiel beschrieben.

Gemäß diesem Ausführungsbeispiel wirkt die Druckmesseinrichtung, die insbesondere als Druckmesseinrichtung zur Bestimmung des Differenzdrucks ausgebildet ist, bevorzugt mit einem von dem Ausgleichsbehälter nach außen abgehenden Messrohr zusammen. Dieses ist bevorzugt an seinem freien Ende geschlossen. In dem Messrohr befinden sich teilweise Flüssigkeit aus dem Ausgleichsbehälter und Luft. Die weitere -zweite - Druckmesseinrichtung zur Bestimmung des Differenzdrucks ist zur Differenzdruckbestimmung zwischen dem Druck in der Speicherkammer und dem Druck der Luft in dem Messrohr ausgebildet. Der ermittelte Differenzdruck wird in der Sicherheitssteuereinrichtung ausgewertet, beispielsweise, indem die ermittelten Differenzdruckwerte gegen Referenzwerte in der wie weiter oben geschilderten Weise verglichen werden.

Bevorzugt ist zur Justierung des Messrohrs dieses mit einer Pumpeneinrichtung für Luft, insbesondere einer Perlpumpeneinrichtung, verbunden. Der Einsatz einer solchen Pumpeneinrichtung dient insbesondere zum "Nullen" des Messrohres. Innerhalb des Messrohres existiert ein Überdruck wegen des Gegendrucks der Flüssigkeitssäule. Wenn das Messrohr undicht ist, kann sich der Überdruck abbauen und das Signal verfälschen. Durch eine regelmäßige Betätigung der Pumpeneinrichtung, die das Messrohr mit Luft befüllt, bis Luft in den Ausgleichsbehälter "ausperlt", können derartige Fehler detektiert werden. Die Steuerung der Pumpeneinrichtung erfolgt vorzugsweise über die Sicherheitssteuereinrichtung. Dazu ist die Pumpeneinrichtung insbesondere über eine geeignete Schnittstelle mit der Sicherheitssteuereinrichtung verbunden, beispielsweise kommunikationsverbunden. Über die Sicherheitssteuereinrichtung kann die Pumpeneirichtung, beispielsweise wie weiter oben beschrieben im Rahmen einer Zeitfunktion, betätigt werden. Das Messrohr mit der Pumpeneinrichtung dient insbesondere auch zur wartungsfreien, sicheren Überwachung des Füllstandes im Ausgleichsbehälter. Die Pumpeneinrichtung als Zündquelle ist dabei ausreichend weit entfernt, beispielsweise außerhalb des Systemschranks oder in der rechten Schrankhälfte. Der Flüssigkeitsstand beziehungsweise die Flüssigkeitssäule kann über lange Zeit detektiert werden.

In einer bevorzugten Weiterbildung des Spülsystems weist/weisen die weitere - zweite - Überwachungseinrichtung zum Überwachen des Zustands der Ausgleichsbehältereinrichtung und/oder die erste Überwachungseinrichtung zum Überwachen des Zustands der Speicherkammer eine Einrichtung zur Erfassung der Höhe der Flüssigkeitssäule, das heißt des Pegelstands, in dem Ausgleichsrohr auf. Diese Maßnahme wird bevorzugt in Ergänzung zu vorstehend bereits beschriebenen Maßnahmen oder als Alternative zu zuvor beschriebenen Maßnahmen durchgeführt. Wie weiter oben erläutert ist, dient der Ausgleichsbehälter zum einen als Überdruckausgleich in der Speicherkammer. Ist der Druck in der Speicherkammer zu groß, oder ist die Speicherkammer zu weit ausgedehnt, drückt das Gasgemisch aus der Speicherkammer gegen die Wassersäule im Ausgleichsrohr. Das Gas wird durchgedrückt und perlt in den Zwischenraum zwischen Flüssigkeitssäule und Deckel im Ausgleichsbehälter. Der Pegel sinkt dabei im Ausgleichsrohr mit steigendem Druck in der Speicherkammer. Die Kenntnis des Pegelstands lässt somit Rückschlüsse auf den in der Speicherkammer herrschenden Druck zu. Die Einrichtung zur Erfassung der Höhe des Pegelstands in dem Ausgleichsrohr kann beispielsweise optisch, beispielsweise unter Zuhilfenahme einer Messskala, oder aber mittels einer anderen Sensoreinrichtung, beispielsweise einer Schwimmsensoreinrichtung, realisiert sein. Wird eine Sensoreinrichtung verwendet, ist diese bevorzugt über eine geeignete Schnittstelle mit der Sicherheitssteuereinrichtung verbunden, beispielsweise kommunikationsverbunden. Die Auswertung erfolgt damit in der Sicherheitssteuereinrichtung, beispielsweise wie in der weiter oben beschriebenen Weise.

Wie weiter oben schon beschrieben wurde, ist in wenigstens einem der Leitungsabschnitte eine Ventileinrichtung angeordnet. Das Spülsystem weist bevorzugt eine weitere - dritte - Überwachungseinrichtung zum Überwachen der Funktionsfähigkeit der Ventileinrichtung(en) auf, wobei die weitere - dritte - Überwachungseinrichtung über eine dieser zugeordneten Schnittstelle in der wie weiter oben beschriebenen Weise mit der Sicherheitssteuereinrichtung verbunden, insbesondere kommunikationsverbunden ist. Diese Maßnahme wird bevorzugt in Ergänzung zu vorstehend bereits beschriebenen Maßnahmen oder als Alternative zu zuvor beschriebenen Maßnahmen durchgeführt. Diese weitere - dritte - Überwachungseinrichtung ist derart bereitgestellt, dass sie in der Lage ist, dass die Ventileinrichtung(en) über geeignete Schnittstellen mit der Sicherheitssteuereinrichtung verbunden sind und insbesondere kommunizieren können. Die Sicherheitssteuereinrichtung kann, wie weiter oben allgemein beschrieben ist, beispielsweise Befehle geben, um die Ventileinrichtungen nach Vorgaben zu öffnen und zu schließen. Die weitere -dritte - Überwachungseinrichtung kann zusätzlich oder alternativ auch wenigstens eine Sensoreinrichtung aufweisen, die derart bereitgestellt ist, dass sie in der Lage ist, die Dichtigkeit der Ventileinrichtung(en) zu prüfen. Die Befehle sowie eventuell ermittelte Sensorwerte werden dann über die Schnittstelle übertragen. Durch die weitere - dritte - Überwachungseinrichtung wird somit insbesondere eine Überwachung der Zustände der Ein- und Ausgangsventileinrichtungen realisiert. Über die Sicherheitssteuereinrichtung erfolgt beispielsweise die Freigabe, ob eine Ventileinrichtung geöffnet werden darf. Zudem ist eine dauerhafte Überprüfung möglich, ob Ventileinrichtungen grob undicht sind. Auch kann nach Freigabe eine Überprüfung erfolgen, wie lange eine Ventileinrichtung geöffnet wurde. Bei den Ventileinrichtungen handelt es sich bevorzugt um Sperrventile, beispielsweise Magnetventile.

Bevorzugt weist die Sicherheitssteuereinrichtung eine Vergleichseinrichtung zum Vergleichen erfasster Sensoreinrichtungswerte und/oder Druckmesseinrichtungswerte mit Referenzwerten, insbesondere mit maximalen und/oder minimalen Referenzwerten, auf. Alternativ oder zusätzlich können in der Sicherheitssteuereinrichtung Befehlsfunktionen, beispielsweise in einem Modul mit Befehlen, abgelegt sen. Über solche Vergleichsvorgänge und Befehlsfunktionen kann die Sicherheitssteuereinrichtung in der wie weiter oben schon beschriebenen Weise einzelne Komponenten des Spülsystems überwachen und steuern. Beispielsweise können Befehlsfunktionen zeitbezogenen sein und ausgelöst werden, das heißt auf die Gegebenheiten der Zeit bezogen. Beispielsweise kann eine Steuerung und/oder Überwachung zu bestimmten Zeiten, in bestimmten Zeitabständen, zu bestimmten Zeitpunkten, für bestimmte Zeitintervalle oder dergleichen erfolgen. Alterativ oder zusätzlich können Befehlsfunktionen ereignisbezogenen sein und ausgelöst werden. beispielsweise beim Auftreten eines bestimmten Geschehens. Beim Auftreten eines solchen Geschehens wird daraus eine Aktivität hergeleitet.

In weiterer Ausgestaltung weist die Sicherheitssteuereinrichtung bevorzugt eine Schnittstelle, beispielsweise eine Kommunikationsschnittstelle, zu einer Betriebsführungseinrichtung des Spülsystems oder des Energiesystems auf. Dadurch können sicherheitsrelevante Zustände des Spülsystems auch für nicht-sicherheitstechnische Funktionen nutzbar gemacht werden.

Die einzelnen zuvor beschriebenen unterschiedlichen Überwachungsmaßnahmen können entweder einzeln oder aber in beliebiger Kombination durchgeführt werden. Je mehr Überwachungsmaßnahmen parallel durchgeführt werden, desto genauer und umfassender ist die Überwachung des Spülsystems. Insbesondere ist mit der vorliegenden Erfindung eine kontinuierliche Überwachung, insbesondere eine kontinuierliche Zustandsanalyse, möglich. Durch das erfindungsgemäße Spülsystem kann der Zustand des Spülsystems, insbesondere einzelner Komponenten des Spülsystems, überwacht werden, ohne dass Komponenten, welche Zündquellen darstellen, zum Einsatz kommen müssen. Solche Zündquellen sind wegen des möglichen Austritts von Wasserstoff in den betreffenden sensiblen Bereichen des Spülsystems nicht erlaubt oder unerwünscht. Das erfindungsgemäß ausgebildete Spülsystem macht eine umfassende Überwachung möglich.

Beim Erkennen von Fehlerzuständen werden dann, insbesondere über die Sicherheitssteuereinrichtung, bevorzugt geeignete Fehlerreaktionen eingeleitet. Bei solchen Fehlerreaktionen kann es sich beispielsweise um das Anzeigen der Fehlerzustände auf einer Anzeigeeinrichtung handeln, damit die Fehlerzustände behoben werden können. Zusätzlich oder alternativ können akustische Warnsignale erzeugt werden. Je nach Art und Grad des Fehlers können einzelne Komponenten des Spülsystems, bis hin zum gesamten Spülsystem, beim Erkennen eines Fehlerzustands abgeschaltet werden. In anderer Ausgestaltung kann beim Erkennen eines Fehlerzustands ein Belüftungsprozess aktiviert werden. Die Erfindung ist nicht auf die genannten Fehlerreaktionen beschränkt.

Bei dem Erfindungssystem handelt es sich insbesondere um ein Hausenergiesystem.

Das Energiesystem weist eine Energiequelleneinrichtung auf, die insbesondere als Elektrolyseeinrichtung, bevorzugt zur Herstellung von Wasserstoff, ausgebildet ist. Zusätzlich oder alternativ weist das Energiesystem eine Energiesenkeneinrichtung auf, die insbesondere als Brennstoffzelleneinrichtung ausgebildet ist, Weiterhin kann das Energiesystem optional eine zweite Energiequelleneinrichtung aufweisen, die insbesondere als Hochdruckspeichereinrichtung, insbesondre zur Speicherung von Wasserstoff, ausgebildet ist und/oder eine zweite Energiesenkeneinrichtung, die bevorzugt als Mitteldruckspeichereinrichtung, insbesondere zur Zwischenspeicherung von Wasserstoff ausgebildet ist.

Das Energiesystem weist zudem ein Spülsystem zum Spülen der Energiequelleneinrichtung und/oder der Energiesenkeneinrichtung auf, das entsprechend dem ersten und zweiten Erfindungsaspekt ausgebildet ist.

In einer bevorzugten Ausführungsform weist das Energiesystem ein erstes Untersystem auf, welches insbesondere in einem Systemschrank angeordnet ist. Die Energiequelleneirichtung und/oder die Energiesenkeneinrichtung sowie das Spülsystem sind dann Bestandteile des ersten Untersystems. Je nach Ausgestaltung können einzelne Komponenten des Speichersystems, beispielsweise Druckmesseinrichtungen, auch außerhalb des Systemschranks angeordnet sein.

Gemäß dem dritten Aspekt der Erfindung wird ein Verfahren zum Überwachen eines Speichersystems in einem Energiesystem bereitgestellt, welches die Merkmale des unabhängigen Patentanspruchs 15 aufweist.

Gemäß dem Verfahren wird ein Energiesystem mit einem Spülsystem gemäß dem ersten und zweiten Erfindungsaspekt betrieben. Das Spülsystem ist Bestandteil des Energiesystems. Zur Funktionsweise des Verfahrens wird zur Vermeidung von Wiederholungen deshalb auch auf die vorstehenden Ausführungen zum ersten und zweiten Aspekt der Erfindung, ebenso wie auf die allgemeinen Ausführungen weiter oben, vollinhaltlich Bezug genommen und verwiesen.

Gemäß dem erfindungsgemäßen Verfahren werden zwischen der wenigstens einen Überwachungseinrichtung zum Überwachen des Zustands des Spülsystems und der Sicherheitssteuereinrichtung des Spülsystems über geeignete Schnittstellen Werte und/oder Daten ausgetauscht. Daten werden dabei bevorzugt über Schnittstellen in Form einer Kommunikationsverbindung ausgetauscht, während Werte, bei denen es sich insbesondere um Sensorwerte handelt, auch über Schnittstellen in Form einer Leitungsverbindung übertragen werden können, je nachdem, wie die Überwachungseinrichtung(en) ausgebildet ist/sind.

Die Sicherheitssteuereinrichtung überwacht das Spülsystem anhand der mit den Überwachungseinrichtungen ausgetauschten Werte und/oder Daten sicherheitsgerichtet. Insbesondere werden dabei Fehlerzustände detektiert.

Beim Erkennen von Fehlerzuständen werden dann bevorzugt geeignete Fehlerreaktionen eingeleitet, was vorzugsweise von der Sicherheitssteuereinrichtung initiiert wird. Bei solchen Fehlerreaktionen kann es sich beispielsweise um das Anzeigen der Fehlerzustände auf einer Anzeigeeinrichtung handeln, damit die Fehlerzustände behoben werden können. Zusätzlich oder alternativ können akustische Warnsignale erzeugt werden. Je nach Art und Grad des Fehlers können einzelne Komponenten des Spülsystems, bis hin zum gesamten Spülsystem, beim Erkennen eines Fehlerzustands abgeschaltet werden. In anderer Ausgestaltung kann beim Erkennen eines Fehlerzustands ein Belüftungsprozess aktiviert werden. Die Erfindung ist nicht auf die genannten Fehlerreaktionen beschränkt.

Mit der vorliegenden Erfindung lassen sich eine Reihe von Vorteilen realisieren. So kann beispielsweise auf den Einsatz von explosionsgeschützten Spezialkomponenten, beispielsweise von Wasserstoffsensoren verzichtet werden. Mit geeigneten Sensoreinrichtungen, beispielsweise einer Druckmesseinrichtung, kann ein Großteil der Überwachung vorgenommen werden. Insbesondere dann, wenn das Spülsystem in einem Systemschrank eingebaut ist, ist keine explosionsgeschützte Ausführung notwendig, da der Systemschrank technisch belüftet wird. Mit der vorliegenden Erfindung sind alle Zustände des Spülsystems bekannt und können sicherheitsgerichtet überwacht werden. Die überwachten Zustände können zudem auch für nicht sicherheitskritische Funktionen, beispielsweise für die Betriebsführung, bereitgestellt werden.

Die Erfindung wird nun anhand eines Ausführungsbeispiels unter Bezugnahme auf die beiliegenden Zeichnungen näher erläutert. Es zeigen
- Figur 1: in schematischer Ansicht ein erfindungsgemäßes Energiesystem mit einem Spülsystem; und
- Figur 2: das Spülsystem im Detail.

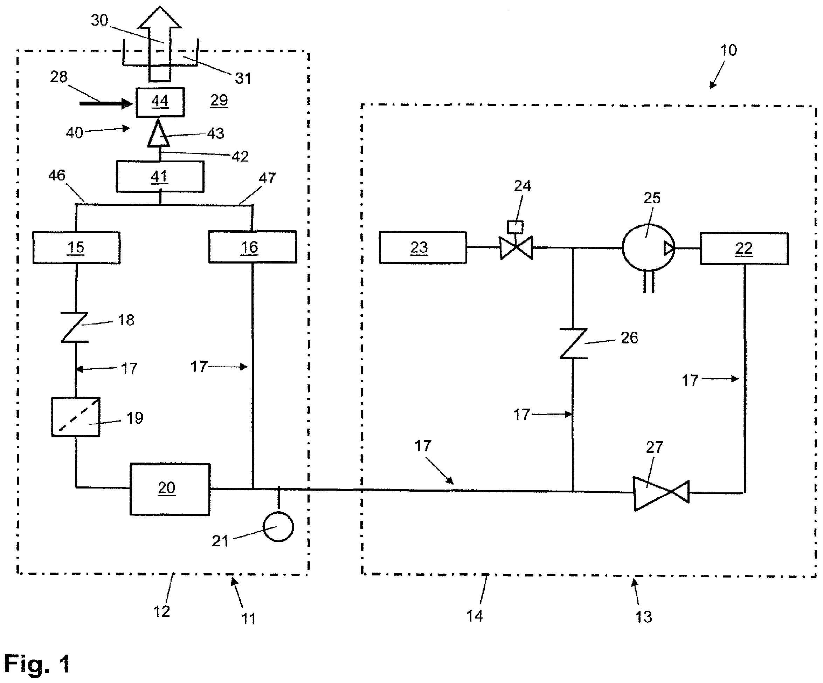

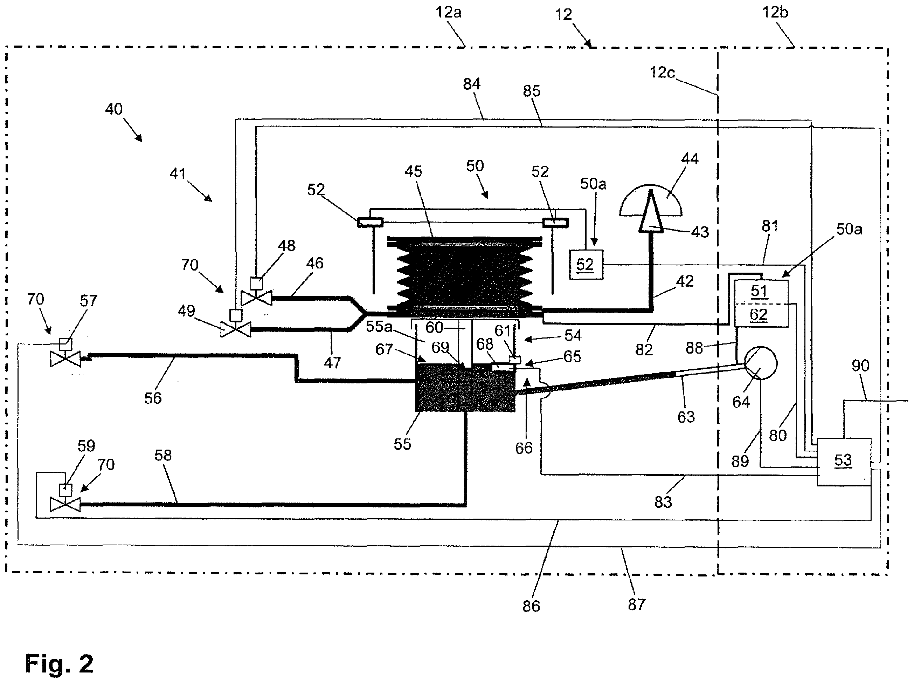

In den Figuren 1 und 2 ist schematisch ein Energiesystem 10 dargestellt, welches als Hausenergiesystem eingesetzt wird. In Figur 1 wird zunächst der grundsätzliche Aufbau des Energiesystems 10 beschrieben.

Wie aus Figur 1 ersichtlich ist, weist das Energiesystem 10 zunächst ein erstes Untersystem 11 auf, welches als Innensystem ausgebildet ist. Das bedeutet, dass sich das erste Untersystem 11 innerhalb des Hauses befindet. Die einzelnen Komponenten des ersten Untersystems 11 sind in einem ersten Systemschrank 12 untergebracht. Zusätzlich weist das Energiesystem 10 ein zweites Untersystem 13 in Form eines Außensystems auf. Das bedeutet, dass sich das zweite Untersystem 13 außerhalb des Hauses befindet. Auch das zweite Untersystem 13 weist eine Reihe unterschiedlicher Komponenten auf, die in einem zweiten Systemschrank 14 untergebracht sind.

Das erste Untersystem 11 weist eine erste Energiequelleneinrichtung 15 auf, bei der es sich um eine Elektrolyseeinrichtung zur Herstellung von Wasserstoff handelt. Zudem weist das erste Untersystem 11 eine erste Energiesenkeneinrichtung 16 auf, bei der es sich um eine Brennstoffzelleneinrichtung handelt. Das zweite Untersystem 13 weist eine zweite Energiequelleneinrichtung 22 auf, bei der es sich um eine Hochdruckspeichereinrichtung handelt. In der Hochdruckspeichereinrichtung wird der in der Elektrolyseeinrichtung erzeugte Wasserstoff bei bis zu 700 bar gespeichert. Zusätzlich verfügt das zweite Untersystem 13 über eine zweite Energiesenkeneinrichtung 23 in Form einer Mitteldruckspeichereinrichtung, in der der erzeugte Wasserstoff bei Drücken zwischen 20 und 60 bar zwischengespeichert wird, bevor er von dort endgültig in der Hochdruckspeichereinrichtung gespeichert wird.

Die einzelnen Komponenten des Energiesystems 10 sind über eine Verbindungsleitungseinrichtung 17 miteinander verbunden, die aus einer Anzahl unterschiedlicher Leitungsabschnitte besteht. Einzelne Leitungsabschnitte sind dabei als so genannte bidirektionale Leitungsabschnitte ausgebildet.

Der in der ersten Energiequelleneirichtung 15 mittels Elektrolyse hergestellte Wasserstoff verlässt die erste Energiequelleneinrichtung 15 über einen Leitungsabschnitt der Verbindungsleitungseinrichtung 17, in dem sich in Strömungsrichtung des erzeugten Wasserstoffs beispielsweise eine Rückschlagventileinrichtung 18 sowie nachfolgend eine Filtereinrichtung 19 und eine Trocknereinrichtung 20 befinden, in denen der erzeugte Wasserstoff gefiltert und getrocknet wird. Die Filtereinrichtung 19 und die Trocknereinrichtung 20 können sich alternativ auch im zweiten Untersystem 13 befinden.

Von der Trocknereinrichtung 20 strömt der erzeugte Wasserstoff über weitere Leitungsabschnitte der Verbindungsleitungseinrichtung 17 zu einer weiteren Rückschlagventileinrichtung 26 in dem zweiten Untersystem 13. Von dort gelangt der erzeugte Wasserstoff in die als Mitteldruckspeicher fungierende zweite Energiesenkeneinrichtung 23, welche über eine Ventileinrichtung 24, die insbesondere als Sperrventil, beispielsweise in Form eines Magnetventils, ausgebildet ist, an der Verbindungsleitungseinrichtung 17 angebunden ist. Vor der als Hochdruckspeichereinrichtung ausgebildeten zweiten Energiequelleneinrichtung 22 befindet sich in der Verbindungsleitungseinrichtung 17 eine Kompressoreinrichtung 25, insbesondere in Form eines Kolbenkompressors. Der in der zweiten Energiesenkeneinrichtung 23 zwischengespeicherte Wasserstoff wird unter Betätigung der Kompressoreinrichtung 25 in der zweiten Energiequelleneinrichtung 22 eingespeichert.

Dieser Herstellungsvorgang des Wasserstoffs bis hin zu dessen Einspeicherung in der zweiten Energiequelleneinrichtung 22 stellt eine erste Betriebsweise des Energiesystems 10 dar. Bei dieser ersten Betriebsweise des Energiesystems 10 herrscht in der Verbindungsleitungseinrichtung 17 ein Druck von 20 bis 60 bar. Ein solcher Druck herrscht auch in der zweiten Energiesenkeneinrichtung 23. Über die Kompressoreinrichtung 25 wird der aus der zweiten Energiesenkeneinrichtung 23, bei der es sich um einen Zwischenspeicher handelt, entnommene Wasserstoff so weit komprimiert, dass er mit Drücken von bis zu 700 bar in der zweiten Energiequelleneinrichtung 22, bei der es sich um eine Hochdruckspeichereinrichtung handelt, eingespeichert werden kann.

Der in der zweiten Energiequelleneinrichtung 22 gespeicherte Wasserstoff wird für den Betrieb der ersten Energiesenkeneinrichtung 16 in Form der Brennstoffzelleneinrichtung verwendet. Der Betrieb der Brennstoffzelleneinrichtung erfolgt in der zweiten Betriebsweise des Energiesystems 10. Die Brennstoffzelleneinrichtung kann aber nur bei Drücken kleiner 20 bar arbeiten. In der zweiten Betriebsweise des Energiesystems 10 wird der Wassersoff aus der zweiten Energiequelleneinrichtung 22 entnommen, über eine Entspannungseinrichtung 27 in Form eines Druckminderers entspannt bevor er in die als Brennstoffzelleneinrichtung ausgebildete erste Energiesenkeneinrichtung 16 eintritt. Zur Messung des Drucks ist wenigstes eine Druckmesseinrichtung 21, beispielsweise in Form eines Drucksensors vorgesehen.

Das in den Figuren 1 und 2 dargestellte Energiesystem 10 stellt einen Teilbereich eines Gesamt-Hausenergiesystems dar, bei dem es sich um ein elektrisch autarkes und vollständig auf erneuerbaren Energien beruhendes multihybrides Hausenergiespeichersystem handelt.

Das multihybride Hausenergiespeichersystem ermöglicht es, die von einer Photovoltaik (PV)-Anlage, einer Kleinwindkraftanlage oder dergleichen erzeugte elektrische Energie bedarfsgesteuert auf das gesamte Jahr zu verteilen. Dabei agiert das System als Inselsystem unabhängig vom elektrischen Netz. Vielmehr soll die Anlage die elektrische Autarkie des Hauses gewährleisten, sodass über das ganze Jahr hinweg keine elektrische Energie aus dem Stromnetz bezogen werden muss.

Die primäre Aufgabe des Hausenergiesystems ist es, die gewonnene elektrische Energie aus Photovoltaik (PV)-Modulen oder dergleichen dem Verbraucher im Haushalt verfügbar zu machen. Sekundär können bei Zeiten niedriger Last oder hoher Einstrahlung elektrische Energieüberschüsse in einem Batterie-Kurzzeit-Speicher zwischengespeichert werden. Tertiär kann im Wasserstoff-Langzeit-Speicher die elektrische Energie als gasförmiger Wasserstoff für Zeiten niedriger Einstrahlung wie Nacht, Winter oder dergleichen mittel- bis langfristig gespeichert und mittels Brennstoffzelle wieder jederzeit bedarfsgerecht zur Verfügung gestellt werden.

Neben energietechnischen Aufgaben fungiert das System auch als kontrollierte Wohnraumlüftung durch ein verbautes Lüftungsgerät.

Der in der Elektrolyseeinrichtung produzierte Wasserstoff fließt über die Wasserstoffleitung in die außenaufgestellte Druckspeicheranlage.

Bei fehlender oder nicht ausreichender PV-Energie wird Energie aus der Batterie zur Deckung der Verbraucherlast entnommen. Reicht die im Kurzzeitspeicher vorrätige Energie nicht aus, kann die Brennstoffzelleinnrichtung den zusätzlichen elektrischen Energiebedarf decken. Im Brennstoffzellenbetrieb fließt der Wasserstoff über die Wasserstoffleitung aus der Druckspeicheranlage zur Brennstoffzelleneinrichtung.

Ein zeitgleicher Betrieb von Brennstoffzelleneinrichtung und Elektrolyseeinrichtung ist ausgeschlossen. Das gesamte System wird zentral über einen Energy Manager mit einem prädiktiven Energiemanagement betrieben.

Das zweite Untersystem ist prinzipiell für den Betrieb im Außenbereich vorgesehen, kann aber unter bestimmten Bedingungen auch innerhalb eines speziellen Bereichs des Hauses errichtet und betrieben werden.

Während des Betriebs des Energiesystems 10 ist es erforderlich, dass die erste Energiequelleneinrichtung 15 in Form der Elektrolyseeinrichtung sowie die erste Energiesenkeneinrichtung 16 in Form der Brennstoffzelleneinrichtung regelmäßig gespült werden, wobei die Brennstoffzelleneinrichtung insbesondere auf der Anodenseite und die Elektrolyseeinrichtung insbesondere auf der Kathodenseite gespült werden. Ein Spülen ist insbesondere erforderlich, um unerwünschte Fremdgasanteile, sowie sich lokal in den Zellstrukturen ansammelndes flüssiges Wasser, die die Leistungsfähigkeit und die Lebensdauer der Brennstoffzelleneinrichtung und/oder der Elektrolyseeinrichtung negativ beeinflussen können, in regelmäßigen Abständen oder abhängig von den Betriebszuständen abzuführen.

Das Spülen erfolgt unter Zuhilfenahme eines Spülsystems 40. dessen Aufbau und Funktionsweise nun in größerem Detail beschrieben werden. Wie aus den Figuren 1 und 2 ersichtlich ist, ist das Spülsystem 40 innerhalb des Systemschranks 12 angeordnet, wobei der Systemschrank 12, wie aus Figur 2 ersichtlich ist, eine linke Systemschrankseite 12a und eine rechte Systemschrankseite 12b aufweist, die über eine Systemschrankwand 12c voneinander getrennt sind. Bei dem Systemschrank 12 handelt es sich um eine luftdichte Schrankkonstruktion.

Das Spülsystem 40 weist zunächst eine Spüleinrichtung 41 auf, die beispielsweise wenigstens eine Speicherkammer 45, insbesondere eine volumenveränderliche Speicherkammer 45, etwa in Form eines Faltenbalgs, aufweist. Die Spüleinrichtung 41, insbesondere die Speicherkammer 45, ist über einen ersten Leitungsabschnitt 46 mit der ersten Energiequelleneinrichtung 15 in Form der Elektrolyseeinrichtung und über einen zweiten Leitungsabschnitt 47 mit der ersten Energiesenkeneinrichtung 16 in Form der Brennstoffzelleneinrichtung 16 verbunden. In beiden Leitungsabschnitten 46, 47 befindet sich jeweils eine Ventileinrichtung 48, 49, die bevorzugt als Sperrventil, beispielsweise als Magnetventil, ausgebildet sind. Aus der Spüleinrichtung 41 tritt während des Spülvorgangs ein Ablassvolumenstrom 42 aus, der Wasserstoff beinhaltet, welcher an dieser Stelle ein Schadgas darstellt. Dadurch bildet sich grundsätzlich eine explosive Atmosphäre, so dass es erforderlich ist, die Abgabe von Wasserstoff beim Spülvorgang unterhalb der Explosionsgrenze zu senken. Dies wird beispielsweise dadurch bewerkstelligt, dass in einer Mischzone 29 des ersten Systemschranks 12, die eine extra dafür vorgesehene und ausgebildete Zone darstellt, und die bevorzugt mit entsprechenden Sicherheitsmaßnahmen ausgestattet ist, der wasserstoffhaltige Ablassvolumenstrom 42 mit einem Luftstrom 28 des Energiesystems 10, insbesondere einem Abluftvolumenstrom so vermischt und damit verdünnt wird, dass der Wasserstoffgehalt in dem dadurch entstehenden resultierenden Fortluftvolumenstroms 30 nur noch einen unter der Explosionsgrenze liegenden Gehalt, beispielsweise von kleiner 10.000 ppm (1 Vol-%), aufweist. Die Abgabe des Ablassvolumenstroms 42 in die Umgebung, das heißt in die Mischzone 29, erfolgt dabei generell über eine geeignete Ausströmeinrichtung 43, die beispielsweise als Blende, Drossel, Düse oder dergleichen ausgebildet sein kann. Der im Rahmen der Vermischung entstehende Fortluftvolumenstrom 30 wird über einen Fortluftkanal 31 aus dem ersten Untersystem 11 beziehungsweise dem ersten Systemschrank 12 abgeführt und kann für andere Funktionen, beispielsweise eine Lüftung und/oder Heizung und/oder Kühlung, bereitgestellt werden. Zur sicheren Verdünnung des Ablassvolumenstroms 42 kann in der Mischzone 29 bevorzugt eine Vermischungseinrichtung 44 vorgesehen sein, in der der Ablassvolumenstrom 42 mit dem Luftstrom 28 vermischt wird.

In Figur 2 ist das Spülsystem 40 im Detail dargestellt. Erfindungsgemäß ist das Spülsystem 40 dabei so ausgebildet, dass mit diesem eine sicherheitsgerichtete Überwachung ermöglicht ist. Dies wird erfindungsgemäß durch eine Reihe unterschiedlicher Überwachungsmaßnahmen realisiert. In Figur 2 sind zu Erläuterungszwecken eine Reihe dieser Überwachungsmaßnahmen parallel und nebeneinander dargestellt. Es ist jedoch selbstverständlich, dass die vorliegende Erfindung, wie in der allgemeinen Beschreibung dargelegt, auch nur eine Unterkombination der Überwachungsmaßnahmen umfassen kann.

Das Spülsystem 40 weist eine erste Überwachungseinrichtung 50 zum Überwachen des Zustands der Speicherkammer 45 auf, die wenigstens eine der Speicherkammer 45 zugeordnete Sensoreinrichtung 50a zur Überwachung des Füllstands der Speicherkammer 45 aufweist. Zusätzlich weist das Spülsystem 45 eine mit der Speicherkammer 45 fluidverbundene Ausgleichsbehältereinrichtung 54 auf. Die Ausgleichsbehältereinrichtung 54 dient dazu, einen Ausgleich für die Speicherkammer 45 zu schaffen, insbesondere wenn diese einen maximalen oder kritischen Füllgrad hinsichtlich Füllmenge und/oder Fülldruck erreicht hat.

Ein zentrales Merkmal des Spülsystems 40 ist durch eine Sicherheitssteuereinrichtung 53 gebildet. Die Sicherheitssteuereinrichtung 53, die beispielsweise als Sicherheitscontroller ausgebildet ist, hat die Funktion, dass damit eine sicherheitsgerichtete Überwachung des Spülsystems 40 realisiert wird. Insbesondere ist die Sicherheitssteuereinrichtung 53 derart ausgebildet, dass sie in der Lage ist, Fehlerzustände im Spülsystem 40 zu detektieren und beim Erkennen solcher Fehlerzustände geeignete Fehlerreaktionen einzuleiten.

Zusätzlich weist das Spülsystem 40 eine zweite Überwachungseinrichtung 66 auf, die zum Überwachen des Zustands der Ausgleichsbehältereinrichtung 54 ausgebildet ist.

Zur Überwachung des Zustands der volumenveränderlichen Speicherkammer 45 weist die Sensoreinrichtung 50a zur Überwachung des Füllstands der Speicherkammer 45, die Bestandteil der ersten Überwachungseinrichtung 50 zum Überwachen des Zustands der Speicherkammer 45 ist, eine Sensoreinrichtung 52 zur Erfassung der Ausdehnung der Speicherkammer 45 auf, die im Ausführungsbeispiel als optische Sensoreinrichtung in Form einer optischen Lichtschrankeneinrichtung ausgebildet ist. Diese Sensoreinrichtung 52 ist über eine geeignete Schnittstelle 82 mit der Sicherheitssteuereinrichtung 53 verbunden, beispielsweise kommunikationsverbunden.

Alternativ oder zusätzlich kann die Sensoreinrichtung 50a zur Überwachung des Füllstands der Speicherkammer 45 eine Druckmesseinrichtung 51 aufweisen oder als Druckmesseinrichtung ausgebildet sein, insbesondere zur Erfassung des Drucks innerhalb der Speicherkammer 45. Die Druckmesseinrichtung 51, die bevorzugt als Druckmesseinrichtung zur Bestimmung eines Differenzdrucks ausgebildet ist, ist über eine geeignete Schnittstelle 80 mit der Sicherheitssteuereinrichtung 53 verbunden, beispielsweise je nach Ausgestaltung leitungsverbunden und/oder kommunikationsverbunden. Die Druckmesseinrichtung 52 kann ein an oder in der Speicherkammer 45 angeordnetes Sensorelement, beispielsweise eine Druckmesszelle aufweisen, die über eine Schnittstelle 82 mit der eigentlichen Druckmesseinrichtung 52 leitungsverbunden ist.

Die Ausgleichsbehältereinrichtung 54 weist einen Ausgleichsbehälter 55 auf, der zumindest bereichsweise mit Wasser, insbesondere mit ultrareinem Wasser, gefüllt oder befüllbar ist. Weiterhin weist die Ausgleichsbehältereinrichtung 54 ein Ausgleichsrohr 60 auf, welches mit der Speicherkammer 45 verbunden ist, und welches in dem Ausgleichsbehälter 55 einmündet. Ebenso findet sich im Ausgleichsbehälter 55 ein Überlauf 61. Zudem weist der Ausgleichsbehälter 55 einen als Zuleitung zum Ausgleichsbehälter 55 ausgebildeten dritten Leitungsabschnitt 56 auf, in dem sich eine Ventileinrichtung 57 befindet, ebenso wie einen als Ableitung vom Ausgleichsbehälter 55 ausgebildeten vierten Leitungsabschnitt 58, in dem sich eine Ventileinrichtung 59 befindet. Beide Ventileinrichtungen 57, 59 sind bevorzugt Sperrventile, vorzugsweise Magnetventile. Der Ausgleichsbehälter 55 befindet sich bevorzugt unterhalb der Speicherkammer 45, beispielsweise des Faltenbalgs. Die Speicherkammer 45 ist unten mit dem Ausgleichsrohr 60 luftdicht verbunden. Das Ausgleichsrohr 60 endet im Ausgleichsbehälter 55. Da der Ausgleichsbehälter 55 teilweise mit Wasser gefüllt ist, endet das Ausgleichsrohr 55 innerhalb der im Ausgleichsbehälter 55 befindlichen Wassersäule. In der Speicherkammer 45 befindliches, Wasserstoff enthaltendes Gas und auch Wasser, kann über das Ausgleichsrohr 60 aus der Speicherkammer 45 in den Ausgleichsbehälter 55 abfließen. Der Ausgleichsbehälter 55 dient somit zum einen als Überdruckausgleich für die Speicherkammer 45. Ist der Druck in der Speicherkammer 45 zu groß, oder ist die Speicherkammer 45 zu weit ausgedehnt, drückt das Gasgemisch aus der Speicherkammer 45 gegen die Wassersäule im Ausgleichsrohr 60 und im Ausgleichsbehälter 60. Das Gas wird durch die Wassersäule im Ausgleichsrohr 60 durchgedrückt und perlt in den Zwischenraum 55a des Ausgleichsbehälters 55, der sich zwischen der Oberfläche der Wassersäule und einem oberen Deckel des Ausgleichsbehälters 55 befindet. Mit steigendem Druck in der Speicherkammer 45 sinkt dabei der Pegel im Ausgleichsrohr 60, so dass der Pegel im Ausgleichsrohr 60, wenn er entsprechend detektiert wird, als ein Maß für den in der Speicherkammer 45 herrschenden Druck herangezogen werden kann.

Weiterhin befindet sich in der Speicherkammer 45 auch Wasser, das ebenfalls über das Ausgleichsrohr 60 in den Ausgleichsbehälter 55 gelangt. Dies geschieht bevorzugt nach dem an sich bekannten Prinzip der kommunizierenden Röhren. Das Wasser kann, wenn die Wassersäule in dem Ausgleichsbehälter 55 eine maximale Höhe erreicht hat, über den vierten Leitungsabschnitt 58 abgelassen werden. Dazu verfügt dieser über die Ventileinrichtung 59. Die maximale Höhe der Wassersäule im Ausgleichsbehälter 55 wird mit einer geeigneten Einrichtung 65 zur Erfassung der Höhe der Wassersäule in Form einer Schwimmersensoreinrichtung 68 oder als Sensoreinrichtung zur Gewichtsmessung gemessen. Die Messwerte der Sensoreinrichtung 68 werden in der Sicherheitssteuereinrichtung 53 ausgewertet, die dazu über eine Schnittstelle 83 mit der Sensoreinrichtung 68 verbunden, insbesondere kommunikationsverbunden, ist. Über den dritten Leitungsabschnitt 56 mit der Ventileinrichtung 57 kann Wasser in den Ausgleichsbehälter 55 eingefüllt werden. Durch die eingefüllte Höhe der Wassersäule in dem Ausgleichsbehälter 55 kann beispielsweise das Druckverhalten in der Speicherkammer 45 beeinflusst und eingestellt werden. Das Ablassen und Einfüllen von Wasser aus und in den Ausgleichsbehälter 55 wird über die Sicherheitssteuereinrichtung 53 gesteuert. Die Ventileinrichtungen 57, 59 sind über geeignete Schnittstellen 86, 87 mit der Sicherheitssteuereinrichtung 53 verbunden, insbesondere kommunikationsverbunden. In gleicher Weise sind auch die Ventileinrichtungen 48, 49 über geeignete Schnittstellen 84, 85 mit der Sicherheitssteuereinrichtung 53 verbunden, insbesondere kommunikationsverbunden.

Durch eine solche Ausgestaltung der Ausgleichsbehältereinrichtung 54 ist insbesondere auch ein regelmäßiger Austausch des Wassers im Ausgleichsbehälter 55 möglich, beispielsweise zum Schutz vor Verkeimung. So kann beispielsweise vorgesehen sein, dass über entsprechende Befehle der Sicherheitssteuereinrichtung 53 in definierten Zeitabständen oder zu definierten Zeitpunkten das Wasser aus dem Ausgleichsbehälter 55 abgelassen und anschließend wieder nachgefüllt wird.

In weiterer Ausgestaltung weist die Überwachungseinrichtung 66 zum Überwachen des Zustands der Ausgleichsbehältereinrichtung 54 eine Einrichtung 67 zur Überwachung der Flüssigkeitssäule innerhalb des Ausgleichsbehälters 55 auf. Die Einrichtung 67 zur Überwachung der Flüssigkeitssäule kann insbesondere eine Schaltereinrichtung zum Entleeren und Befüllen des Ausgleichsbehälters 55 aufweisen oder mit dieser zusammenwirken, welche über eine Schnittstelle mit der Sicherheitssteuereinrichtung 53 verbunden, insbesondere kommunikationsverbunden ist.

Darüber hinaus weist die Einrichtung 65 zur Erfassung der Höhe der Flüssigkeitssäule in dem Ausgleichsbehälter 55 eine Druckmesseinrichtung 62 zur Bestimmung des Differenzdrucks zwischen dem Druck in der Speicherkammer 45 und dem Druck der Wassersäule in dem Ausgleichsbehälter 55 auf. Diese Druckmesseinrichtung 62 kann beispielsweise als eine eigene, im Verglich zu der weiter oben beschriebenen ersten Druckmesseinrichtung 51 unabhängige zweite Druckmesseinrichtung ausgebildet sein. Oder aber die Druckmesseinrichtung 62 ist Bestandteil der ersten Druckmesseinrichtung 51. Die zweite Druckmesseinrichtung 62, egal in welcher Variante, ist über eine geeignete Schnittstelle 80 mit der Sicherheitssteuereinrichtung 53 verbunden, beispielsweise kommunikationsverbunden. Die zweite Druckmesseinrichtung 62 wirkt über eine Schnittstelle 88 mit einem von dem Ausgleichsbehälter 55 nach außen abgehenden Messrohr 63 zusammen. Dieses ist bevorzugt an seinem freien Ende geschlossen. In dem Messrohr 63 befinden sich teilweise Wasser aus dem Ausgleichsbehälter 55 und Luft. Die zweite Druckmesseinrichtung 62 zur Bestimmung des Differenzdrucks ist zur Differenzdruckbestimmung zwischen dem Druck in der Speicherkammer 45 und dem Druck der Luft in dem Messrohr 63 ausgebildet. Der ermittelte Differenzdruck wird in der Sicherheitssteuereinrichtung 53 ausgewertet, beispielsweise, indem die ermittelten Differenzdruckwerte gegen Referenzwerte verglichen werden. Zur Justierung des Messrohrs 63 ist dieses mit einer Pumpeneinrichtung 64 für Luft, insbesondere einer Perlpumpeneinrichtung, verbunden. Der Einsatz einer solchen Pumpeneinrichtung 64 dient insbesondere zum "Nullen" des Messrohres 63. Die Pumpeneinrichtung 64 ist über eine geeignete Schnittstelle 89 mit der Sicherheitssteuereinrichtung 53 verbunden, beispielsweise kommunikationsverbunden.

Die zweite Überwachungseinrichtung 66 zum Überwachen des Zustands der Ausgleichsbehältereinrichtung 54 und/oder die erste Überwachungseinrichtung 50 zum Überwachen des Zustands der Speicherkammer 45 weisen schließlich auch noch eine Einrichtung 69 zur Erfassung der Höhe der Wassersäule, das heißt des Pegelstands, in dem Ausgleichsrohr 60 auf. Der Ausgleichsbehälter 55 dient unter anderem als Überdruckausgleich in der Speicherkammer 45. Ist der Druck in der Speicherkammer 45 zu groß, oder ist die Speicherkammer 45 zu weit ausgedehnt, drückt das Gasgemisch aus der Speicherkammer 45 gegen die Wassersäule im Ausgleichsrohr 60. Das Gas wird durchgedrückt und perlt in den Zwischenraum 55a zwischen Wassersäule und Deckel im Ausgleichsbehälter 55. Der Pegel sinkt dabei im Ausgleichsrohr 60 mit steigendem Druck in der Speicherkammer 45. Die Kenntnis des Pegelstands lässt somit Rückschlüsse auf den in der Speicherkammer 45 herrschenden Druck zu. Die Einrichtung 69 zur Erfassung der Höhe des Pegelstands in dem Ausgleichsrohr 60 kann beispielsweise optisch, beispielsweise unter Zuhilfenahme einer Messskala, oder aber mittels einer anderen Sensoreinrichtung realisiert sein. Wird eine Sensoreinrichtung verwendet, ist diese bevorzugt über eine geeignete Schnittstelle mit der Sicherheitssteuereinrichtung 53 verbunden.

Das Spülsystem 40 weist bevorzugt eine dritte Überwachungseinrichtung 70 zum Überwachen der Funktionsfähigkeit der Ventileinrichtungen 48, 49, 57, 59 auf. Die Sicherheitssteuereinrichtung 53 kann über die entsprechenden Schnittstellen beispielsweise Befehle geben, um die Ventileinrichtungen 48, 49, 57, 59 nach Vorgaben zu öffnen und zu schließen. Die dritte Überwachungseinrichtung 70 kann zusätzlich oder alternativ auch wenigstens eine Sensoreinrichtung aufweisen, die derart bereitgestellt ist, dass sie in der Lage ist, die Dichtigkeit der Ventileinrichtungen 48, 49, 57, 59 zu prüfen. Die Befehle sowie eventuell ermittelte Sensorwerte werden dann über die Schnittstellen übertragen.

Die Sicherheitssteuereinrichtung 53 weist bevorzugt eine Schnittstelle 90, beispielsweise eine Kommunikationsschnittstelle, zu einer Betriebsführungseinrichtung des Spülsystems 40 oder des Energiesystems 10 auf. Dadurch können sicherheitsrelevante Zustände des Spülsystems 40 auch für nicht-sicherheitstechnische Funktionen nutzbar gemacht werden.

Beim Erkennen von Fehlerzuständen werden dann über die Sicherheitssteuereinrichtung 53 geeignete Fehlerreaktionen eingeleitet. Bei solchen Fehlerreaktionen kann es sich beispielsweise um das Anzeigen der Fehlerzustände auf einer Anzeigeeinrichtung handeln, damit die Fehlerzustände behoben werden können. Zusätzlich oder alternativ können akustische Warnsignale erzeugt werden. Je nach Art und Grad des Fehlers können einzelne Komponenten des Spülsystems 40, bis hin zum gesamten Spülsystem 40, beim Erkennen eines Fehlerzustands abgeschaltet werden.

### Bezugszeichenliste

- 10: Energiesystem (Hausenergiesystem
- 11: Erstes Untersystem (Innensystem)
- 12: Erster Systemschrank
- 12a: Linke Schrankwandseite
- 12b: Rechte Schrankwandseite
- 12c: Systemschrankwand
- 13: Zweites Untersystem (Außensystem)
- 14: Zweiter Systemschrank
- 15: Erste Energiequelleneinrichtung (Elektrolyseeinrichtung)
- 16: Erste Energiesenkeneinrichtung (Brennstoffzelleneinrichtung)
- 17: Verbindungsleitungseinrichtung
- 18: Rückschlagventileinrichtung
- 19: Filtereinrichtung
- 20: Trocknereinrichtung
- 21: Druckmesseinrichtung
- 22: Zweite Energiequelleneinrichtung (Hochdruckspeichereinrichtung)
- 23: Zweite Energiesenkeneinrichtung (Mitteldruckspeichereinrichtung)
- 24: Ventileinrichtung
- 25: Kompressoreinrichtung
- 26: Rückschlagventileinrichtung
- 27: Entspannungsvorrichtung (Druckminderer)
- 28: Luftvolumenstrom (Abluftvolumenstrom)
- 29: Mischzone
- 30: Fortluftvolumenstrom
- 31: Fortluftkanal
- 32: Kühlereinrichtung (Notkühler)

- 40: Spülsystem
- 41: Spüleinrichtung
- 42: Ablassvolumenstrom
- 43: Ausströmeinrichtung
- 44: Vermischungseinrichtung
- 45: Speicherkammer (volumenveränderlich)
- 46: Erster Leitungsabschnitt
- 47: Zweiter Leitungsabschnitt
- 48: Ventileinrichtung
- 49: Ventileinrichtung
- 50: Überwachungseinrichtung zum Überwachen des Zustands der Speicherkammer
- 50a: Sensoreinrichtung zur Überwachung des Füllstands der Speicherkammer
- 51: Druckmesseinrichtung
- 52: Sensoreinrichtung zur Erfassung der Ausdehnung der Speicherkammer
- 53: Sicherheitssteuereinrichtung
- 54: Ausgleichsbehältereinrichtung
- 55: Ausgleichsbehälter
- 55a: Zwischenraum
- 56: Dritter Leitungsabschnitt (Zuleitung)
- 57: Ventileinrichtung
- 58: Vierter Leitungsabschnitt (Ableitung)
- 59: Ventileinrichtung
- 60: Ausgleichsrohr
- 61: Überlauf
- 62: Druckmesseinrichtung
- 63: Messrohr
- 64: Pumpeneinrichtung
- 65: Einrichtung zur Erfassung der Höhe der Flüssigkeitssäule
- 66: Überwachungseinrichtung zum Überwachen des Zustands der Ausgleichsbehältereinrichtung
- 67: Einrichtung zur Überwachung der Flüssigkeitssäule innerhalb des Ausgleichsbehälters
- 68: Schwimmersensoreinrichtung
- 69: Einrichtung zur Erfassung der Höhe der Flüssigkeitssäule im Ausgleichsrohr
- 70: Überwachungseinrichtung zur Überwachung der Funktionsfähigkeit der Ventileinrichtungen
- 80: Schnittstelle (Kommunikation)
- 81: Schnittstelle (Kommunikation)
- 82: Schnittstelle
- 83: Schnittstelle (Kommunikation)
- 84: Schnittstelle (Kommunikation)
- 85: Schnittstelle (Kommunikation)
- 86: Schnittstelle (Kommunikation)
- 87: Schnittstelle (Kommunikation)
- 88: Schnittstelle
- 89: Schnittstelle (Kommunikation)
- 90: Schnittstelle zur Betriebsführungseinrichtung (Kommunikation)

## Patentansprüche

1. Energiesystem (10), mit einer Energiequelleneinrichtung (15) und/oder mit einer Energiesenkeneinrichtung (16), und mit einem Spülsystem (40) zum Spülen der Energiequelleneinrichtung (15) und/oder der Energiesenkeneinrichtung (16), aufweisend eine Spüleinrichtung (41) mit einer Speicherkammer (45), die eingangsseitig mit einem von der Energiequelleneinrichtung (15) abgehenden als Spülleitung ausgebildeten Leitungsabschnitt (46) und/oder mit einem von der Energiesenkeneinrichtung (16) abgehenden als Spülleitung ausgebildeten Leitungsabschnitt (47) fluidverbunden ist, eine Überwachungseinrichtung (50) zum Überwachen des Zustands der Speicherkammer (45), wobei die Überwachungseinrichtung (50) wenigstens eine der Speicherkammer (45) zugeordnete Sensoreinrichtung (50a) zur Überwachung des Füllstands der Speicherkammer (45) aufweist, **dadurch gekennzeichnet, dass** das Spülsystem (40) eine Sicherheitssteuereinrichtung (53) aufweist, dass die Sensoreinrichtung (50a) zur Überwachung des Füllstands der Speicherkammer (45) über eine dieser zugeordnete Schnittstelle (80) mit der Sicherheitssteuereinrichtung (53) verbunden ist, dass die Sensoreinrichtung (50a) zur Überwachung des Füllstands der Speicherkammer (45) eine Druckmesseinrichtung (51) aufweist oder als Druckmesseinrichtung ausgebildet ist, insbesondere zur Erfassung des Drucks innerhalb der Speicherkammer (45), und dass die Sicherheitssteuereinrichtung (53) zur sicherheitsgerichteten Überwachung des Spülsystems (40), insbesondere zum Detektieren von Fehlerzuständen und zum Einleiten von Fehlerreaktionen, bereitgestellt ist.

2. Energiesystem nach Anspruch 1, **dadurch gekennzeichnet, dass** die Druckmesseinrichtung (51) als Druckmesseinrichtung zur Erfassung eines Differenzdrucks und/oder zur Erfassung eines Relativdrucks und/oder zur Erfassung eines Absolutdrucks ausgebildet ist.

3. Energiesystem (10), mit einer Energiequelleneinrichtung (15) und/oder mit einer Energiesenkeneinrichtung (16), und mit einem Spülsystem (40) zum Spülen der Energiequelleneinrichtung (15) und/oder der Energiesenkeneinrichtung (16), aufweisend eine Spüleinrichtung (41) mit einer Speicherkammer (45), die eingangsseitig mit einem von der Energiequelleneinrichtung (15) abgehenden als Spülleitung ausgebildeten Leitungsabschnitt (46) und/oder mit einem von der Energiesenkeneinrichtung (16) abgehenden als Spülleitung ausgebildeten Leitungsabschnitt (47) fluidverbunden ist, eine erste Überwachungseinrichtung (50) zum Überwachen des Zustands der Speicherkammer (45), wobei die erste Überwachungseinrichtung (50) wenigstens eine der Speicherkammer (45) zugeordnete Sensoreinrichtung (50a) zur Überwachung des Füllstands der Speicherkammer (45) aufweist, sowie weiterhin aufweisend eine mit der Speicherkammer (45) fluidverbundene Ausgleichsbehältereinrichtung (54), **dadurch gekennzeichnet, dass** das Spülsystem (40) eine Sicherheitssteuereinrichtung (53) aufweist, dass die Sensoreinrichtung (50a) zur Überwachung des Füllstands der Speicherkammer (45) über eine dieser zugeordnete Schnittstelle (80, 81) mit der Sicherheitssteuereinrichtung (53) verbunden ist, dass das Spülsystem (40) wenigstens eine weitere Überwachungseinrichtung (66) zum Überwachen des Zustands der Ausgleichsbehältereinrichtung (54) aufweist, die über wenigstens eine dieser zugeordnete Schnittstelle (83, 89) mit der Sicherheitssteuereinrichtung (53) verbunden ist, und dass die Sicherheitssteuereinrichtung (53) zur sicherheitsgerichteten Überwachung des Spülsystems (40), insbesondere zum Detektieren von Fehlerzuständen und zum Einleiten von Fehlerreaktionen, bereitgestellt ist.

4. Energiesystem nach Anspruch 3, **dadurch gekennzeichnet, dass** die Speicherkammer (45) als volumenveränderliche Speicherkammer ausgebildet ist, dass die Sensoreinrichtung (50a) zur Überwachung des Füllstands der Speicherkammer (45) als Sensoreinrichtung (52) zur Erfassung der Ausdehnung der Speicherkammer (45) ausgebildet ist, und dass die Sensoreinrichtung (52) zur Erfassung der Ausdehnung der Speicherkammer optional als optische Lichtschrankeneinrichtung oder als lasergestützte Abstandsmesseinrichtung oder als Dehnungsmessstreifeneinrichtung ausgebildet ist.

5. Energiesystem nach einem der Ansprüche 3 oder 4, **dadurch gekennzeichnet, dass** die Sensoreinrichtung (50a) zur Überwachung des Füllstands der Speicherkammer (45) eine Druckmesseinrichtung (51) aufweist oder als Druckmesseinrichtung ausgebildet ist, insbesondere zur Erfassung des Drucks innerhalb der Speicherkammer (45), und dass die Druckmesseinrichtung (51) insbesondere als Druckmesseinrichtung zur Erfassung eines Differenzdrucks und/oder zur Erfassung eines Relativdrucks und/oder zur Erfassung eines Absolutdrucks ausgebildet ist.

6. Energiesystem nach einem der Ansprüche 3 bis 5, **dadurch gekennzeichnet, dass** die Ausgleichsbehältereinrichtung (54) einen Ausgleichsbehälter (55) aufweist, der zumindest bereichsweise mit einer Flüssigkeit, insbesondere mit Wasser, gefüllt oder befüllbar ist, dass die Ausgleichsbehältereinrichtung (54) ein Ausgleichsrohr (60) aufweist, welches, insbesondere luftdicht, mit der Speicherkammer (45) verbunden ist und welches in dem Ausgleichsbehälter (55) einmündet, und dass der Ausgleichsbehälter (55) optional einen als Zuleitung zum Ausgleichsbehälter (55) ausgebildeten Leitungsabschnitt (56) und/oder einen als Ableitung vom Ausgleichsbehälter (55) ausgebildeten Leitungsabschnitt (58) aufweist, und dass insbesondere die Überwachungseinrichtung (66) zum Überwachen des Zustands der Ausgleichsbehältereinrichtung (54) eine Einrichtung (67) zur Überwachung der Flüssigkeitssäule innerhalb des Ausgleichsbehälters (55) aufweist, welche insbesondere eine Schaltereinrichtung zum Entleeren und Befüllen des Ausgleichsbehälters (55) aufweist oder mit dieser zusammenwirkt.

7. Energiesystem nach Anspruch 6, **dadurch gekennzeichnet, dass** in der Sicherheitssteuereinrichtung (53) eine Zeitfunktion implementiert ist, die bereitgestellt ist, um die Nachfüllzeit der Flüssigkeit in den Ausgleichsbehälter (55) nach einer Entleerung zu überwachen.

8. Energiesystem nach einem der Ansprüche 6 oder 7, **dadurch gekennzeichnet, dass** die Überwachungseinrichtung (66) zum Überwachen des Zustands der Ausgleichsbehältereinrichtung (54) eine Einrichtung (65) zur Erfassung der Höhe der Flüssigkeitssäule in dem Ausgleichsbehälter (54) aufweist, welche insbesondere als Schwimmsensoreinrichtung (68) oder als Einrichtung zur Gewichtsmessung ausgebildet ist und/oder welche insbesondere eine Druckmesseinrichtung (62) zur Bestimmung des Differenzdrucks zwischen dem Druck in der Speicherkammer (45) und dem Druck der Flüssigkeitssäule aufweist.

9. Energiesystem nach Anspruch 8, **dadurch gekennzeichnet, dass** die Druckmesseinrichtung (62) zur Bestimmung des Differenzdrucks mit einem von dem Ausgleichsbehälter (55) nach außen abgehenden, insbesondere am Ende geschlossenen, Messrohr (63) zusammenwirkt, in welchem sich teilweise Flüssigkeit aus dem Ausgleichsbehälter (55) und Luft befinden, und dass die Druckmesseinrichtung (62) zur Bestimmung des Differenzdrucks zur Differenzdruckbestimmung zwischen dem Druck in der Speicherkammer (45) und dem Druck der Luft in dem Messrohr (63) ausgebildet ist und dass optional zur Justierung des Messrohrs (63) dieses mit einer Pumpeneinrichtung (64) für Luft, insbesondere einer Perlpumpeneinrichtung, verbunden ist.

10. Energiesystem nach einem der Ansprüche 6 bis 9, **dadurch gekennzeichnet, dass** die Überwachungseinrichtung (66) zum Überwachen des Zustands der Ausgleichsbehältereinrichtung (45) und/oder die erste Überwachungseinrichtung (50) zum Überwachen des Zustands der Speicherkammer (45) eine Einrichtung (69) zur Erfassung der Höhe der Flüssigkeitssäule in dem Ausgleichsrohr (55) aufweist.

11. Energiesystem nach einem der Ansprüche 1 bis 10, **dadurch gekennzeichnet, dass** in wenigstens einem der Leitungsabschnitte eine Ventileinrichtung (48, 49, 57, 59) angeordnet ist, dass das Spülsystem (40) eine weitere Überwachungseinrichtung (70) zum Überwachen der Funktionsfähigkeit der Ventileinrichtung(en) (48, 49, 57, 59) aufweist, und dass die weitere Überwachungseinrichtung (70) über wenigstens eine dieser zugeordnete Schnittstelle (84, 85, 86, 87) mit der Sicherheitssteuereinrichtung (53) verbunden ist.

12. Energiesystem nach einem der Ansprüche 1 bis 11, **dadurch gekennzeichnet, dass** die Sicherheitssteuereinrichtung (53) eine Vergleichseinrichtung zum Vergleichen erfasster Sensoreinrichtungswerte und/oder Druckmesseinrichtungswerte mit Referenzwerten, insbesondere mit maximalen und/oder minimalen Referenzwerten, aufweist und/oder dass in der Sicherheitssteuereinrichtung (53) Befehlsfunktionen zur zeitbezogenen und/oder ereignisbezogenen Überwachung abgelegt sind und/oder dass die Sicherheitssteuereinrichtung (53) eine Schnittstelle (90) zu einer Betriebsführungseinrichtung des Spülsystems (40) oder des Energiesystems (10) aufweist, um sicherheitsrelevante Zustände des Spülsystems (40) auch für nicht-sicherheitstechnische Funktionen nutzbar zu machen.

13. Energiesystem nach einem der Ansprüche 1 bis 12, **dadurch gekennzeichnet, dass** die Energiequelleneinrichtung (15) als Elektrolyseeinrichtung ausgebildet ist, und/oder dass die Energiesenkeneinrichtung (16)als Brennstoffzelleneinrichtung ausgebildet ist.

14. Energiesystem nach einem der Ansprüche 1 bis 13, **dadurch gekennzeichnet, dass** das Energiesystem (10) einen, insbesondere luftdichten, Systemschrank (12) aufweist, und dass das Spülsystem (40) in dem Systemschrank (12) angeordnet ist.

15. Verfahren zum Überwachen eines Spülsystems (40) in einem Energiesystem (10) nach einem der Ansprüche 1 bis 14, **dadurch gekennzeichnet, dass** zwischen der wenigstens einen Überwachungseinrichtung (50, 66, 70) zum Überwachen des Zustands des Spülsystems (40) und der Sicherheitssteuereinrichtung (53) des Spülsystems (40) über geeignete Schnittstellen (80 bis 89) Werte und/oder Daten ausgetauscht werden, und dass die Sicherheitssteuereinrichtung (53) das Spülsystem (40) anhand der mit den Überwachungseinrichtungen (50, 66, 70) ausgetauschten Werte und/oder Daten sicherheitsgerichtet überwacht, insbesondere Fehlerzustände detektiert und beim Erkennen von Fehlerzuständen Fehlerreaktionen einleitet.

## Claims

1. Energy system (10), with an energy source device (15) and/or with an energy sink system (16), and with a purging system (40) for purging the energy source device (15) and/or the energy sink device (16), comprising a purging device (41) with a storage chamber (45), which is fluidically connected on the inlet side to a line section (46), which leads off from the energy source device (15) and is designed as a purging line, and/or to a line section (47), which leads off from the energy sink device (16) and is designed as a purging line, a monitoring device (50) for monitoring the state of the storage chamber (45), wherein the monitoring device (50) comprises at least one sensor device (50a) assigned to the storage chamber (45) for monitoring the filling level of the storage chamber (45), **characterized in that** the purging system (40) comprises a safety control device (53), **in that** the sensor device (50a) for monitoring the filling level of the storage chamber (45) is connected to the safety control device (53 via an interface (80) associated therewith, **in that** the sensor device (50a) for monitoring the filling level of the storage chamber (45) comprises a pressure measuring device (51) or is designed as a pressure measuring device, in particular for detecting the pressure within the storage chamber (45), and **in that** the safety control device (53) is provided for the safety-directed monitoring of the purging system (40), in particular for detecting error states and for initiating error reactions.

2. Energy system according to Claim 1, **characterized in that** the pressure measuring device (51) is provided as a pressure measuring device for detecting a differential pressure and/or for detecting a relative pressure and/or for detecting an absolute pressure.

3. Energy system (10), with an energy source device (15) and/or with an energy sink system (16), and with a purging system (40) for purging the energy source device (15) and/or the energy sink device (16), comprising a purging device (41) with a storage chamber (45), which is fluidically connected on the inlet side to a line section (46), which leads off from the energy source device (15) and is designed as a purging line, and/or to a line section (47), which leads off from the energy sink device (16) and is designed as a purging line, a first monitoring device (50) for monitoring the state of the storage chamber (45), wherein the first monitoring device (50) comprises at least one sensor device (50a) assigned to the storage chamber (45) for monitoring the filling level of the storage chamber (45), and further comprising a compensation container device (54) being fluidically connected to the storage chamber (45) **characterized in that** the purging system (40) comprises a safety control device (53), **in that** the sensor device (50a) for monitoring the filling level of the storage chamber (45) is connected to the safety control device (53) via an interface (80, 81) associated therewith, **in that** the purging system (40) comprises at least one further monitoring device (66) for monitoring the state of the compensation container device (54), which is connected to the safety control device (53) via at least one interface (83, 89) associated therewith, and **in that** the safety control device (53) is provided for the safety-directed monitoring of the purging system (40), in particular for detecting error states and for initiating error reactions.

4. Energy system according to Claim 3, **characterized in that** the storage chamber (45) is configured as a storage chamber of variable volume, **in that** the sensor device (50a) for monitoring the filling level of the storage chamber (45) is configured as a sensor device (52) for detecting the expansion of the storage chamber (45), and **in that** the sensor device (52) for detecting the expansion of the storage chamber is optionally provided as an optical light-barrier device or as a laser-assisted distance measuring device or as a strain gauge device.

5. Energy system according to anyone of Claims 3 or 4, **characterized in that** the sensor device (50a) for monitoring the filling level of the storage chamber (45) comprises a pressure measuring device (51) or is provided as a pressure measuring device, in particular for detecting the pressure within the storage chamber (45), and **in that** the pressure measuring device (51) is configured in particular as a pressure measuring device for detecting a differential pressure and/or for detecting a relative pressure and/or for detecting an absolute pressure.

6. Energy system according to anyone of Claims 3 to 5, **characterized in that** the compensation container device (54) comprises a compensation container (55), which can be filled or is filled at least partially with a liquid, in particular with water, **in that** the compensation container device (54) comprises a compensation tube (60) which, in particular in an airtight manner, is connected to the storage chamber (45) and which opens into the compensation container (55), and **in that** the compensation container (55) optionally comprises a line section (56) configured as a supply line to the compensation container (55) and/or a line section (56) configured as a discharge line from the compensation container (55),and that in particular the monitoring device (66) for monitoring the state of the compensation container device (54) comprises a device (67) for monitoring the liquid column within the compensation container (55), which in particular comprises a switch device for emptying and filling the compensation container (55) or cooperates with the same.

7. Energy system according to Claim 6, **characterized in that** a time function is implemented in the safety control device (53), which is provided in order to monitor the refill time of the liquid into the compensation container (55) after emptying.

8. Energy system according to anyone of Claims 6 or 7, **characterized in that** the monitoring device (66) for monitoring the state of the compensation container device (54) comprises a device (65) for detecting the height of the liquid column in the compensation container (55), which device being configured in particular as a float sensor device (68) or as a device for weight measurement and/or which in particular comprises a pressure measuring device (62) for determining the differential pressure between the pressure in the storage chamber (45) and the pressure of the liquid column.

9. Energy system according to claim 8, **characterized in that** the pressure measuring device (62) for determining the differential pressure interacts with a measuring tube (63) which protrudes outwardly from the compensation container (55), and which in particular is closed at the end, in which measuring tube partially liquid from the compensation container (55) and air is located, and **in that** the pressure measuring device (62) for determining the differential pressure is provided for differential pressure determination between the pressure in the storage chamber (45) and the pressure of the air in the measuring tube (63) and that optionally, in order to adjust the measuring tube (63), the latter is connected to a pump device (64) for air, in particular a bead pump device.

10. Energy system according to anyone of Claims 6 to 9, **characterized in that** the monitoring device (66) for monitoring the state of the compensation container device (45) and/or the first monitoring device (50) for monitoring the state of the storage chamber (45) comprises a device (69) for detecting the height of the liquid column in the compensation tube (55).

11. Energy system according to anyone of Claims 1 to 10, **characterized in that** a valve device (48, 49, 57, 59) is provided in at least one of the line sections, **in that** the purging system (40) comprises a further monitoring device (70) for monitoring the operability of the valve device(s) (48, 49, 57, 59), and **in that** the further monitoring device (70) is connected to the safety control device (53) via at least one interface (84, 85, 86, 87) being assigned thereto.

12. Energy system according to anyone of Claims 1 to 11, **characterized in that** the safety control device (53) comprises a comparison device for comparing detected sensor device values and/or pressure measurement device values with reference values, in particular with maximum and/or minimum reference values, and/or **in that** command functions for time-related and/or event-related monitoring are stored in the safety control device (53), and/or **in that** the safety control device (53) comprises an interface (90) to an operating management device of the purging system (40) or of the energy system (10), in order to make safety-relevant states of the purging system (40) usable also for non-safety functions.

13. Energy system according to anyone of Claims 1 to 12, **characterized in that** the energy source device (15) is configured as an electrolysis device, and/or that the energy sink device (16) is configured as a fuel cell device.

14. Energy system according to anyone of claims 1 to 13, **characterized in that** the energy system (10) comprises an, in particular air tight, system cabinet (12), and that the purging system (40) is arranged inside the system cabinet (12).

15. Method for monitoring a purging system (40) in an energy system (10) according to anyone of Claims 1 to 145, **characterized in that** between the at least one monitoring device (50, 66, 70) for monitoring the state of the purging system (40) and the safety control device (53) of the purging system (40), values and/or data are exchanged via suitable interfaces (80 to 89), and **in that** the safety control device (53) monitors the purging system (40) on the basis of the values and/or data exchanged with the monitoring devices (50, 66, 70) in a safety-oriented manner, in particular detects error states, and initiates error reactions in the event of detection of error states.

## Revendications

1. Système d'énergie (10), avec un appareil de source d'énergie (15) et/ou avec un appareil de diminution d'énergie (16), et avec un système de rinçage (40) pour rincer l'appareil de source d'énergie (15) et/ou l'appareil de diminution d'énergie (16), présentant un appareil de rinçage (41) avec une chambre de stockage (45) qui est reliée fluidiquement côté entrée à une section de conduite (46) partant de l'appareil de source d'énergie (15) et réalisée en tant que conduite de rinçage et/ou à une section de conduite (47) partant de l'appareil de diminution d'énergie (16) et réalisé en tant que de conduite de rinçage, un appareil de surveillance (50) pour surveiller l'état de la chambre de stockage (45), dans lequel l'appareil de surveillance (50) présente au moins un appareil de détection (50a) associé à la chambre de stockage (45) pour surveiller le niveau de remplissage de la chambre de stockage (45), **caractérisé en ce que** le système de rinçage (40) présente un appareil de commande de sécurité (53), **en ce que** l'appareil de détection (50a) est relié à l'appareil de commande de sécurité (53) pour surveiller le niveau de remplissage de la chambre de stockage (45) par l'intermédiaire d'une interface (80) associée à celle-ci, **en ce que** l'appareil de détection (50a) présente un appareil de mesure de pression (51) pour surveiller le niveau de remplissage de la chambre de stockage (45) ou est conçu en tant qu'appareil de mesure de pression, en particulier pour détecter la pression à l'intérieur de la chambre de stockage (45), et **en ce que** l'appareil de commande de sécurité (53) est mis à disposition pour la surveillance sûre du sécurité du système de rinçage (40), en particulier pour détecter des états d'erreur et pour déclencher des réactions à l'erreur.

2. Système d'énergie selon la revendication 1, **caractérisé en ce que** l'appareil de mesure de pression (51) est conçu en tant qu'appareil de mesure de pression pour détecter une pression différentielle et/ou pour détecter une pression relative et/ou pour détecter une pression absolue.

3. Système d'énergie (10), avec un appareil de source d'énergie (15) et/ou avec un appareil de diminution d'énergie (16), et avec un système de rinçage (40) pour rincer l'appareil de source d'énergie (15) et/ou l'appareil de diminution d'énergie (16), présentant un appareil de rinçage (41) avec une chambre de stockage (45), qui est reliée fluidiquement côté entrée à une section de conduite (46) partant de l'appareil de source d'énergie (15) et réalisée en tant que conduite de rinçage et/ou à une section de conduite (47) partant de l'appareil de diminution d'énergie (16) et réalisé en tant que de conduite de rinçage, un premier appareil de surveillance (50) pour surveiller l'état de la chambre de stockage (45), dans lequel le premier appareil de surveillance (50) présente au moins un appareil de détection (50a) associé à la chambre de stockage (45) pour surveiller le niveau de remplissage de la chambre de stockage (45), et présente en outre un appareil de réservoir d'équilibrage (54) relié fluidiquement à la chambre de stockage (45), **caractérisé en ce que** le système de rinçage (40) présente un appareil de commande de sécurité (53), **en ce que** l'appareil de détection (50a) est relié à l'appareil de commande de sécurité (53) pour surveiller le niveau de remplissage de la chambre de stockage (45) par l'intermédiaire d'une interface (80, 81) associée à celle-ci, **en ce que** le système de rinçage (40) présente au moins un autre appareil de surveillance (66) pour surveiller l'état de l'appareil de réservoir d'équilibrage (54) qui est relié à l'appareil de commande de sécurité (53) par l'intermédiaire d'au moins une interface (83, 89) associée à celui-ci, et **en ce que** l'appareil de commande de sécurité (53) est mis à disposition pour la surveillance sûre du système de rinçage (40), en particulier pour détecter des états d'erreur et pour déclencher des réactions à l'erreur.

4. Système d'énergie selon la revendication 3, **caractérisé en ce que** la chambre de stockage (45) est conçue en tant que chambre de stockage à volume variable, **en ce que** l'appareil de détection (50a) pour surveiller le niveau de remplissage de la chambre de stockage (45) est conçu en tant qu'appareil de détection (52) pour détecter l'extension de la chambre de stockage (45), et **en ce que** l'appareil de détection (52) pour détecter l'extension de la chambre de stockage est conçu facultativement en tant qu'appareil optique à barrière lumineuse ou en tant qu'appareil de mesure de distance assisté par laser ou en tant qu'appareil à jauge de contrainte.

5. Système d'énergie selon l'une quelconque des revendications 3 ou 4, **caractérisé en ce que** l'appareil de détection (50a) présente un appareil de mesure de pression (51) pour surveiller le niveau de remplissage de la chambre de stockage (45) ou est conçu en tant qu'appareil de mesure de pression, en particulier pour détecter la pression à l'intérieur de la chambre de stockage (45), et **en ce que** l'appareil de mesure de pression (51) est conçu en particulier en tant qu'appareil de mesure de pression pour détecter une pression différentielle et/ou pour détecter une pression relative et/ou pour détecter une pression absolue.

6. Système d'énergie selon l'une quelconque des revendications 3 à 5, **caractérisé en ce que** l'appareil de réservoir d'équilibrage (54) présente un réservoir d'équilibrage (55) qui est rempli ou peut être rempli au moins par zones avec un liquide, en particulier avec de l'eau, **en ce que** l'appareil de réservoir d'équilibrage (54) présente un tube d'équilibrage (60) qui est relié, en particulier de manière étanche à l'air, à la chambre de stockage (45) et qui débouche dans le réservoir d'équilibrage (55), et **en ce que** le réservoir d'équilibrage (55) présente facultativement une section de conduite (56) conçue en tant que conduite d'amenée au réservoir d'équilibrage (55) et/ou une section de conduite (58) conçue en tant que conduite d'évacuation du réservoir d'équilibrage (55), et **en ce que**, en particulier, l'appareil de surveillance (66) pour surveiller l'état de l'appareil de réservoir d'équilibrage (54) présente un appareil (67) pour surveiller la colonne de liquide à l'intérieur du réservoir d'équilibrage (55), laquelle colonne présente en particulier un appareil de commutation pour vider et remplir le réservoir d'équilibrage (55) ou coopère avec celui-ci.

7. Système d'énergie selon la revendication 6, **caractérisé en ce qu'**une fonction de temporisation est mise en œuvre dans l'appareil de commande de sécurité (53), laquelle fonction est prévue pour surveiller le temps de remplissage du liquide dans le réservoir d'équilibrage (55) après une vidange.

8. Système d'énergie selon l'une quelconque des revendications 6 ou 7, **caractérisé en ce que** l'appareil de surveillance (66) pour surveiller l'état de l'appareil de réservoir d'équilibrage (54) présente un appareil (65) pour détecter la hauteur de la colonne de liquide dans le réservoir d'équilibrage (54), colonne qui est conçue en particulier en tant qu'appareil de capteur flottant (68) ou en tant qu'appareil de mesure de poids et/ou qui présente en particulier un appareil de mesure de pression (62) pour déterminer la pression différentielle entre la pression dans la chambre de stockage (45) et la pression de la colonne de liquide.

9. Système d'énergie selon la revendication 8, **caractérisé en ce que** l'appareil de mesure de pression (62), pour déterminer la pression différentielle, coopère avec un tube de mesure (63) partant du réservoir d'équilibrage (55) vers l'extérieur, en particulier fermé à son extrémité, tube dans lequel se trouvent en partie du liquide provenant du réservoir d'équilibrage (55) et de l'air, et **en ce que** l'appareil de mesure de pression (62) est conçu pour déterminer la pression différentielle entre la pression dans la chambre de stockage (45) et la pression de l'air dans le tube de mesure (63) et **en ce que**, facultativement, pour ajuster le tube de mesure (63), celui-ci est relié à un appareil de pompage (64) pour l'air, en particulier un appareil de pompage à perles.

10. Système d'énergie selon l'une quelconque des revendications 6 à 9, **caractérisé en ce que** l'appareil de surveillance (66) pour surveiller l'état de l'appareil de réservoir d'équilibrage (45) et/ou le premier appareil de surveillance (50) pour surveiller l'état de la chambre de stockage (45) présente un appareil (69) pour détecter la hauteur de la colonne de liquide dans le tube d'équilibrage (55).

11. Système d'énergie selon l'une quelconque des revendications 1 à 10, **caractérisé en ce qu'**un appareil de soupape (48, 49, 57, 59) est disposé dans au moins une des sections de conduite, **en ce que** le système de rinçage (40) présente un autre appareil de surveillance (70) pour surveiller la capacité de fonctionnement du ou des appareils de soupape (48, 49, 57, 59), et **en ce que** l'autre appareil de surveillance (70) est relié à l'appareil de commande de sécurité (53) par l'intermédiaire d'au moins une interface (84, 85, 86, 87) associée à celui-ci.

12. Système d'énergie selon l'une quelconque des revendications 1 à 11, **caractérisé en ce que** l'appareil de commande de sécurité (53) présente un appareil de comparaison pour comparer des valeurs d'appareil de capteur et/ou des valeurs d'appareil de mesure de pression détectées avec des valeurs de référence, en particulier avec des valeurs de référence maximales et/ou minimales, et/ou **en ce que** des fonctions de commande pour surveiller en fonction du temps et/ou en fonction de l'événement sont enregistrées dans l'appareil de commande de sécurité (53) et/ou **en ce que** l'appareil de commande de sécurité (53) présente une interface (90) vers un appareil de gestion d'exploitation du système de rinçage (40) ou du système d'énergie (10) pour rendre des états du système de rinçage (40) relatifs à la sécurité utilisables également pour des fonctions de non-sécurité.

13. Système d'énergie selon l'une quelconque des revendications 1 à 12, **caractérisé en ce que** l'appareil de source d'énergie (15) est conçu en tant qu'appareil d'électrolyse, et/ou **en ce que** l'appareil de diminution d'énergie (16) est conçu en tant qu'appareil de pile à combustible.

14. Système d'énergie selon l'une quelconque des revendications 1 à 13, **caractérisé en ce que** le système d'énergie (10) présente une armoire de système (12), en particulier étanche à l'air, et **en ce que** le système de rinçage (40) est disposé dans l'armoire de système (12).

15. Procédé de surveillance d'un système de rinçage (40) dans un système d'énergie (10) selon l'une quelconque des revendications 1 à 14, **caractérisé en ce que** des valeurs et/ou des données sont échangées entre le au moins un appareil de surveillance (50, 66, 70) pour surveiller l'état du système de rinçage (40) et l'appareil de commande de sécurité (53) du système de rinçage (40) par l'intermédiaire d'interfaces adaptées (80 à 89), et **en ce que** l'appareil de commande de sécurité (53) surveille de manière sûre le système de rinçage (40) à l'aide des valeurs et/ou données échangées avec les appareils de surveillance (50, 66, 70), en particulier détecte des états d'erreur et déclenche des réactions à l'erreur lors de la détection d'états d'erreur.
